# EUROPÄISCHE PATENTSCHRIFT

(11) **EP 3 840 981 B1**
(45) Veröffentlichungstag und Bekanntmachung des Hinweises auf die Patenterteilung: **08.11.2023**
(21) Anmeldenummer: 19746062.9
(22) Anmeldetag: 24.07.2019
(51) Int. Cl.: B60N 2/015, B60N 2/68, F16B 5/02, F16B 35/06, F16B 43/00

(54) **SYSTEM ZUM VERBINDEN EINES BEFESTIGUNGSPROFILS FÜR EINE SITZVORRICHTUNG EINES FAHRZEUGES MIT EINEM HALTEELEMENT EINES FAHRZEUGBODENS**
SYSTEM FOR JOINING AN ATTACHMENT PROFILE FOR A SEAT DEVICE OF A VEHICLE WITH A HOLDING ELEMENT OF A VEHICLE FLOOR
SYSTÈME POUR CONNECTER UN PROFILÉ DE FIXATION POUR UN DISPOSITIF FORMANT SIÈGE AVEC UN ÉLÉMENT D'ATTACHE D'UN PLANCHER DE VÉHICULE

(30) Priorität: 24.08.2018 DE 102018120708
(43) Veröffentlichungstag der Anmeldung: 30.06.2021
(73) Patentinhaber: Isringhausen GmbH & Co. KG, 32657 Lemgo (DE)
(72) Erfinder: KRETZSCHMAR, Marius, 32816 Schieder-Schwalenberg (DE); GIETL, Daniel, 32108 Bad Salzuflen (DE); VON DER HEIDE, Thomas, 32657 Lemgo (DE)
(74) Vertreter: DTS Patent- und Rechtsanwälte Schnekenbühl und Partner mbB
(86) Internationale Anmeldenummer: PCT/EP2019/069856
(87) Internationale Veröffentlichungsnummer: WO 2020/038681

(56) Entgegenhaltungen:
- EP-A1- 3 228 394
- WO-A1-00/76801
- FR-A1- 2 886 357
- FR-A1- 2 936 847
- JP-A- H08 108 783
- JP-A- 2018 090 141
- US-A- 4 997 328

## Beschreibung

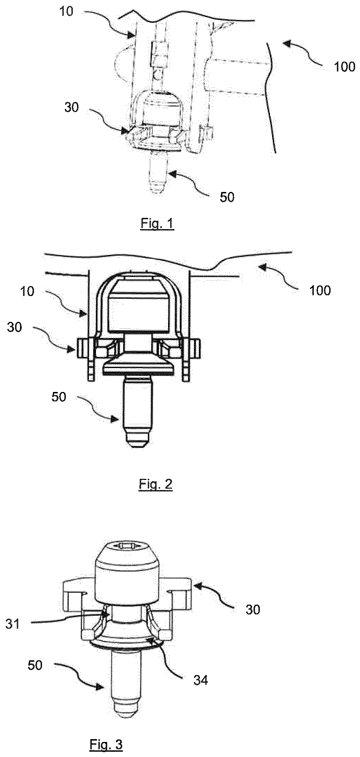

Die Erfindung betrifft ein System zum Verbinden eines Befestigungsprofils für eine Sitzvorrichtung eines Fahrzeuges mit einem Halteelement eines Fahrzeugbodens. Ferner betrifft die Erfindung ein Befestigungsprofil sowie ein Verbindungselement. Üblicherweise umfasst - wie in Figuren 1 bis 3 dargestellt - ein System 100 zum Verbinden eines Befestigungsprofils 10 für eine Sitzvorrichtung eines Fahrzeuges mit einem Halteelement 50 eines Fahrzeugbodens ein Befestigungsprofil 10 und ein Verbindungselement 30.

Hierbei ist das Verbindungselement 30 am Befestigungsprofil 10 verschweißt, um eine ausreichende Stabilität im Falle eines Crashs zu gewährleisten.

Zur Montage im Fahrzeug wird das verschweißte Verbindungselement 30 an einem am Fahrzeugboden befestigten Haltelement 50 angeordnet.

Die Bauteiltoleranzen beim Verschweißen des Verbindungselements 30 mit dem Befestigungsprofil 10 sowie des Halteelements 50 am Fahrzeugboden werden durch eine entsprechend große Öffnung 34 und Aufnahme 31 des Verbindungselements 30 kompensiert.

Aufgrund der Größe der Öffnung 34 bzw. der Aufnahme 31 muss ein Halteelement 50 nicht exakt mittig vor dem Verbindungselement 30 bzw. dessen Öffnung 34 stehen. Wie aus den Figuren 1 bis 3 hervorgeht, ist der Schaft- bzw. Stiftdurchmesser des Halteelements 50 entsprechend kleiner als die Öffnung 34 bzw. als die Aufnahme 31. Durch die möglichen Verschiebungen des Verbindungselements 30 relativ zum Halteelement 50 ergeben sich asymmetrische Überdeckungen der Kontaktflächen zwischen Halteelement 50 und Verbindungselement 30.

Ebenfalls ergeben sich dadurch asymmetrische Belastungen im Crashfall, die zu ungünstigen Verformungen des Halteelements 50 und im schlimmsten Fall zum Ausknüpfen führen können.

Aus WO 00/76801 A1, JP 2018 090141 A und JP H08 108783 A sind hierzu z.B. Sitzbefestigungen offenbart. Daneben sind aus FR 2 936 847 A1, EP 3 228 394 A1 und US 4 997 328 A z.B. weitere Befestigunsmittel offenbart.

Daher ist es Aufgabe der vorliegenden Erfindung, ein System, ein Befestigungsprofil und/oder ein Verbindungselement anzugeben, welche kostengünstig und materialsparend herstellbar sind sowie vorzugsweise eine symmetrische Auflage eines Halteelements an einem Verbindungselement gewährleisten und bevorzugterweise die Gefahr einer Trennung von Verbindungselement und Halteelement bei einem Crash verringern.

Diese Aufgabe wird erfindungsgemäß durch Befestigunsprofil nach Anspruch 1, durch ein Verbindungselement nach Anspruch 6 sowie ein System nach Anspruch 11 gelöst. Weitere vorteilhafte Weiterbildungen sind Gegenstand der Unteransprüche.

Erfindungsgemäß umfasst bei einem ersten Aspekt der vorliegenden Erfindung ein Befestigungsprofil zur Befestigung einer Sitzvorrichtung eines Fahrzeuges an einem Fahrzeugboden, insbesondere an einem Halteelement eines Fahrzeugbodens:
- ein Seitenwandteil, das sich im Wesentlichen in einer ersten Ebene erstreckt, und
- einen Aufnahmebereich zum verschiebbaren Aufnehmen eines Verbindungselements, das der Verbindung des Befestigungsprofils mit einem Halteelement eines Fahrzeugbodens dient,
wobei der Aufnahmebereich als Auflage für ein Verbindungselement ein Bodenelement umfasst, das sich im Wesentlichen in einer zweiten Ebene erstreckt, sodass das Befestigungsprofil im Querschnitt L-förmig ausgebildet ist,
- wobei der Aufnahmebereich wenigstens ein Führungselement, insbesondere zwei Führungselemente, zur seitlichen Führung eines Verbindungselements umfasst.

Auf diese Weise kann ein Verbindungselement im Aufnahmebereich beweglich angeordnet werden, sodass aufgrund der Bewegung ein Toleranzausgleich zwischen einem Halteelement am Fahrzeugboden und dem zu befestigenden Befestigungsprofil erfolgen kann.

Es ist bevorzugt, dass die Schnittrichtung zur Erzeugung des Querschnitts gleichorientiert ist zur Anschlussrichtung, in welcher sich das Befestigungsprofil zur Anbindung am Rahmen einer Sitzvorrichtung erstreckt. Anders ausgedrückt, ist es günstig, wenn senkrecht zur Anschlussrichtung für die Anbindung am Rahmen einer Sitzvorrichtung das Befestigungsprofil im Querschnitt L-förmig ausgebildet ist.

Mit anderen Worten ausgedrückt, stellt der Aufnahmebereich günstigerweise eine Auflagefläche in Form des Bodenelements für das Verbindungselement in einer X-Y Ebene zur Verfügung, sodass dieses auf dem Bodenelement aufliegen kann und auf diesem relativ bewegbar zum Befestigungsprofil angeordnet ist.

Günstigerweise sind die erste und/oder zweite und/oder eine dritte Ebene zueinander derart orientiert, dass sich zumindest zwei Ebenen in einem Winkel zwischen 30 und 90 Grad schneiden.

Vorteilhafterweise sind die erste und/oder zweite und/oder eine dritte Ebene zueinander senkrecht orientiert.

Auch ist es günstig, wenn es sich bei der ersten Ebene um eine Ebene handelt, die von einer ersten und zweiten Raumrichtung aufgespannt wird.

Günstigerweise handelt es sich bei der zweiten Ebene um eine Ebene, die von einer zweiten und dritten Raumrichtung aufgespannt wird.

Vorzugsweise handelt es sich bei der dritten Ebene um eine Ebene, die von einer ersten und dritten Raumrichtung aufgespannt wird.

Vorzugsweise sind die erste und/oder zweite und/oder dritte Raumrichtung zueinander senkrecht orientiert.

Des Weiteren ist es bevorzugt, dass der Aufnahmebereich derart ausgebildet ist, dass ein Verbindungselement in den Aufnahmebereich entlang einer ersten Raumrichtung einsetzbar ist, und dass das Verbindungselement innerhalb des Aufnahmebereichs und relativ zum Befestigungsprofil entlang einer zweiten und/oder einer dritten Raumrichtung linear bewegbar bzw. verschiebbar ist.

Alternativ ist es von Vorteil, wenn der Aufnahmebereich derart ausgebildet ist, dass ein Verbindungselement in den Aufnahmebereich durch Drehung um eine zweite oder um eine dritte Raumrichtung einsetzbar ist, und dass das Verbindungselement innerhalb des Aufnahmebereichs und relativ zum Befestigungsprofil um eine erste Raumrichtung rotatorisch bewegbar bzw. drehbar oder entlang der zweiten und/oder der dritten Raumrichtung linear bewegbar bzw. verschiebbar ist.

Auch ist es von Vorteil, wenn das Seitenwandteil zusammen mit dem Bodenelement den Aufnahmebereich ausbildet, in welchem ein Verbindungselement bewegbar zum Befestigungsprofil einlegbar ist.

Vorteilhafterweise ist das Seitenwandteil U-förmig ausgebildet.

Günstigerweise umfasst das Seitenwandteil ein erstes Seitenwandelement als Rückseite, wobei vorzugsweise das erste Seitenwandelement das Befestigungsprofil mit einem Rahmen einer Sitzvorrichtung verbindet.

Ferner ist es vorteilhaft, wenn sich das erste Seitenwandelement im Wesentlichen in der ersten Ebene erstreckt.

Auch ist es bevorzugt, dass das erste Seitenwandelement einen geschwungenen Verlauf aufweist, um zwei Ebenen (vorzugsweise jeweils in der zweiten Ebene ausgerichtet) mit unterschiedlicher Ausrichtung zum ersten Seitenwandelement und auf unterschiedlichen Höhen miteinander zu verbinden.

Auch ist es günstig, wenn das Seitenwandteil ein zweites und ein drittes Seitenwandelement jeweils als Seitenführung für ein Verbindungselement umfasst.

Vorteilhafterweise erstreckt sich das zweite und das dritte Seitenwandelement jeweils im Wesentlichen in der dritten Ebene.

Unter "im Wesentlichen in einer Ebene erstrecken" wird vorzugsweise in der vorliegenden Beschreibung verstanden, dass sich das Bauteil oder Element, das sich im Wesentlichen in der Ebene erstreckt, in einem räumlichen Quader befindet, dessen größte Seitenfläche gleichorientiert zur Ebene ist, in die sich das Bauteil im Wesentlichen erstreckt, und deren kleinste Seitenfläche senkrecht zu dieser Ebene orientiert ist, wobei vorzugsweise die kleinste Fläche höchstens 20 % der größten Seitenfläche entspricht.

Bei einer Variante der Erfindung umfassen das zweite und das dritte Seitenwandelement jeweils einen Vorsprung für einen Führungsabschnitt eines Verbindungselements.

Vorzugsweise bilden das erste, zweite und dritte Seitenwandelement zusammen eine U-Form.

Bevorzugterweise sind das Bodenelement und die Seitenwandelemente einstückig ausgebildet.

Ferner ist es möglich, dass das Bodenelement einen Bodenteil und gegebenenfalls einen Bodenerhöhungsteil umfasst, welcher die Höhe eines in den Aufnahmebereich einlegbaren Verbindungselements relativ zum Seitenwandteil bestimmt. Vorteilhafterweise ist der Bodenteil mit dem Seitenwandteil zur Aussteifung verbunden.

Auch ist es günstig, wenn sich der Bodenerhöhungsteil vom Bodenteil weg und in Richtung des Aufnahmebereichs erstreckt, um die Höhe eines in den Aufnahmebereich einlegbaren Verbindungselements relativ zu dem Seitenwandteil zu bestimmen. Günstigerweise ist der Bodenerhöhungsteil durch Umformen des Bodenteils, insbesondere durch Prägen aus dem Bodenteil, hergestellt.

Vorteilhafterweise sind der Bodenerhöhungsteil und/oder der Bodenteil U-förmig ausgebildet. Dadurch kann ein Einführen eines Halteelements in das Befestigungsprofil, insbesondere entlang der dritten Raumrichtung, gewährleistet werden.

Des Weiteren ist es günstig, wenn sich die beiden gleichorientierten Schenkel des U-förmigen Bodenerhöhungsteil und/oder des U-förmigen Bodenteils entlang der dritten oder entlang der ersten Raumrichtung erstrecken. Somit können diese eine Auflage für ein Verbindungselement schaffen.

Ferner kann es von Vorteil sein, wenn das Bodenelement einen Bodenverspannungsteil umfasst, welcher sich vom Bodenteil in entgegengesetzte Richtung zum Aufnahmebereich weg erstreckt, um eine Anlagefläche zum Verspannen gegen einen Fahrzeugboden zu bilden.

Indem der Aufnahmebereich wenigstens ein Führungselement, insbesondere zwei Führungselemente, zur seitlichen Führung eines Verbindungselements umfasst, bildet das wenigstens eine Führungselement zusammen mit einem Seitenwandelement des Seitenwandteils eine Führung zum seitlichen Verschieben eines Verbindungselements innerhalb des Aufnahmebereichs.

Bei einer Variante der Erfindung erstreckt sich das wenigstens eine Führungselement säulenartig vom Bodenelement weg, um zusammen mit dem Seitenwandteil des Befestigungsprofils, insbesondere mit einem ersten als Rückseite und/oder zweiten und/oder dritten als Seitenführung ausgebildeten Seitenwandelement des Seitenwandteils, eine Führung zum seitlichen Verschieben eines Verbindungselements innerhalb des Aufnahmebereichs zu bilden.

Es ist von Vorteil, wenn sich das wenigstens eine Führungselement säulenartig entlang der ersten Raumrichtung erstreckt.

Vorteilhafterweise ist das wenigstens eine Führungselement gegenüberliegend einem Seitenwandelement des Seitenwandteils und beanstandet zum Seitenwandelement angeordnet.

Bei einer Variante der Erfindung ist das wenigstens eine Führungselement mit einem zweiten und dritten Seitenwandelement des Seitenwandteils einstückig ausgebildet, um eine fensterartige Aufnahmestelle zusammen mit dem Bodenelement zu bilden.

Mit anderen Worten ausgedrückt, ist es von Vorteil, wenn ein Seitenwandteil, insbesondere dessen zweites und drittes Seitenwandelement, einen Ausschnitt aufweist, um zusammen mit dem Bodenelement eine fensterartige Aufnahmestelle für einen Teil eines Verbindungselements zu bilden.

Günstigerweise umfasst das Befestigungsprofil ein Verbindungsteilprofil, wobei vorzugsweise das Verbindungsteilprofil im Anschluss an das Seitenwandteil, insbesondere senkrecht zum Seitenwandteil orientiert, angeordnet ist.

Auch kann vorgesehen sein, dass das Verbindungsteilprofil das Befestigungsprofil zu einem Rahmen einer Sitzvorrichtung verbindet.

Auch ist es günstig, wenn das Verbindungsteilprofil in Anschlussrichtung, in welcher sich das Befestigungsprofil zur Anbindung am Rahmen einer Sitzvorrichtung erstreckt, ausgebildet ist.

Ferner ist es günstig, wenn das Verbindungsteilprofil einen Aufnahmeabschnitt zum Eingreifen eines zweiten Schenkels eines Verbindungselements umfasst.

Auch ist es von Vorteil, wenn das erste Seitenwandelement eine Durchführung zum Durchführen eines ersten Schenkels eines Verbindungselements umfasst.

Vorteilhafterweise ist das Verbindungsteilprofil U-förmig ausgebildet.

Auch ist es günstig, wenn das Seitenwandteil und das Verbindungsteilprofil einstückig ausgebildet sind.

Ferner ist es günstig, wenn das Befestigungsprofil einteilig oder einstückig ausgebildet ist.

Ein zweiter Aspekt der vorliegenden Erfindung umfasst ein Verbindungselement zum lösbaren Verbinden eines Befestigungsprofils an einem Halteelement eines Fahrzeugbodens.

Erfindungsgemäß umfasst das Verbindungselement zum lösbaren Verbinden eines vorangehend definierten Befestigunsprofils an einem Halteelement eines Fahrzeugbodens:
- eine Aufnahme zum Einschieben eines Halteelements eines Fahrzeugbodens,
- wobei die Aufnahme als Ausnehmung ausgebildet ist und sich in das Verbindungselement derart von außen nach innen erstreckt, dass ein Halteelement in die Aufnahme von außen in das Verbindungselement einschiebbar ist,
- wobei das Verbindungselement durch Stanzen und/oder durch Tiefziehen hergestellt ist,
- wobei das Verbindungselement wenigstens einen Führungsabschnitt zum Führen und Positionieren innerhalb eines Aufnahmebereichs eines Befestigungsprofils umfasst.

Es ist günstig, wenn das Verbindungselement plattenförmig ausgebildet ist, wobei vorzugsweise das Verbindungselement eine Materialstärke im Bereich zwischen 2 und 5 mm, bevorzugterweise im Bereich zwischen 3 und 4 mm, aufweist. Günstigerweise ist die Aufnahme ähnlich einem offenen Langloch ausgebildet.

Ferner kann vorgesehen sein, dass die Aufnahme zwei Teilbereiche umfasst, wobei vorzugsweise ein erster Teilbereich als Einführhilfe für das vereinfachte Einschieben eines Halteelements eines Fahrzeugbodens in das Verbindungselement ausgebildet ist.

Auch ist es günstig, dass der erste Teilbereich eine Öffnung zum Einschieben eines Halteelements eines Fahrzeugbodens in das Verbindungselement umfasst.

Vorzugsweise ist die Aufnahme und/oder der erste Teilbereich auf eine bestimmbare Öffnungsbreite konisch zulaufend ausgebildet.

Günstigerweise umfasst der erste Teilbereich eine größere Öffnungsbreite für ein Halteelement als ein zweiter Teilbereich.

Ferner ist bevorzugt, dass ein zweiter Teilbereich als Montagebereich ausgebildet ist, in den ein Halteelement eines Fahrzeugbodens zur Befestigung einschiebbar und anordenbar ist.

Auch kann vorgesehen sein, dass die Aufnahme passgenau auf ein Halteelement an einem Fahrzeugboden angepasst ist.

Günstigerweise weist die Aufnahme, insbesondere der zweite Teilbereich, zusammen mit einem Halteelement eines Fahrzeugbodens einen Laufsitz als Passung, insbesondere einen engen Laufsitz, auf.

Dabei ist es von Vorteil, wenn ein Laufsitz eine Passung im Bereich H7/f7 bis F8/h9 und vorzugsweise ein enger Laufsitz eine Passung im Bereich G7/h6 bis H7/g6 aufweist.

Des Weiteren ist es günstig, wenn das Verbindungselement eine Montagekante umfasst, die aus der Oberfläche des Verbindungselements hervorragt.

Ferner ist es möglich, dass die Montagekante durch Umformen und/oder durch Tiefziehen und/oder die Aufnahme durch Ausstanzen hergestellt ist.

Bevorzugterweise umgibt die Montagekante die Aufnahme als Rand, wobei vorzugsweise die Montagekante zumindest teilweise rampenförmig ausgebildet ist.

Auch ist es bevorzugt, dass die Montagekante von außen nach innen, bezogen auf das Verbindungselement, ansteigt.

Ferner es günstig, wenn die Montagekante beginnend am zweiten Teilbereich hin zur Öffnung des ersten Teilbereichs keilförmig zuläuft, sodass vorzugsweise die Montagekante am zweiten Teilbereich ihre maximale Höhe und an der Öffnung des ersten Teilbereichs ihre minimale Höhe umfasst.

Erfindungsgemäß ist vorgesehen, dass der wenigstens eine Führungsabschnitt, insbesondere seitlich, aus dem Verbindungselement als Nase hervorragt, um zwischen einem Führungselement und einem Seitenwandelement oder in einem Seitenwandelement eines Befestigungsprofils geführt zu werden.

Alternativ ist vorgesehen, dass der wenigstens eine Führungsabschnitt als U-förmiger oder halbkreisförmiger Teilabschnitt seitlich am Verbindungselement ausgebildet ist, um einen Vorsprung, insbesondere eine Sicke, eines Seitenwandelements eines Befestigungsprofils teilweise zu umschließen bzw. aufzunehmen.

Vorzugsweise umfasst das Verbindungselement an der gegenüberliegenden Seite zu einer Öffnung der Aufnahme ein Befestigungselement zum bewegbaren Anordnen an einem Befestigungsprofil.

Des Weiteren ist bevorzugt, dass das Befestigungselement zwei Schenkel umfasst und L-förmig ausgebildet ist.

Günstigerweise ist ein erster Schenkel des Befestigungselements zum Durchführen durch eine Durchführung eines Befestigungsprofils ausgebildet.

Auch ist es günstig, wenn der erste Schenkel in der Ebene des Verbindungselements als partielle Verlängerung ausgebildet ist, wobei vorzugsweise der erste Schenkel einen zweiten Schenkel mit der Aufnahme verbindet.

Ferner ist es von Vorteil, wenn das Verbindungselement seitlich neben der Öffnung der Aufnahme Zentriernasen zum vereinfachten Einführen eines Halteelements am Fahrzeugboden umfasst.

Vorteilhafterweise erstrecken sich die Zentriernasen in einem fließenden Übergang gebogen aus der Ebene des Verbindungselements von der Aufnahme weg.

Des Weiteren ist es günstig, wenn sich die Zentriernasen in entgegengesetzte Richtung zu dem Befestigungselement, insbesondere zu einem zweiten Schenkel des Befestigungselements, erstrecken.

Vorzugsweise ist ein zweiter Schenkel des Befestigungselements zum Eingreifen in einen Aufnahmeabschnitt eines Verbindungsteilprofils eines Befestigungsprofils ausgebildet.

Ferner ist es möglich, dass sich der zweite Schenkel im Wesentlichen senkrecht von der Ebene des Verbindungselements weg erstreckt.

Ein dritter Aspekt der vorliegenden Erfindung umfasst ein System zum Verbinden eines Befestigungsprofils für eine Sitzvorrichtung eines Fahrzeuges mit einem Halteelement eines Fahrzeugbodens.

Erfindungsgemäß weist ein System zum Verbinden eines Befestigungsprofils für eine Sitzvorrichtung eines Fahrzeuges mit einem Halteelement eines Fahrzeugbodens auf:
- ein Befestigungsprofil nach dem ersten Aspekt, und
- ein Verbindungselement nach dem zweiten Aspekt.

Ferner ist erfindungsgemäß vorgesehen, dass das Verbindungselement bewegbar zum Befestigungsprofil und im Aufnahmebereich des Befestigungsprofils angeordnet ist, um eine Selbstausrichtung des Verbindungselements zu einem Halteelement, das an einem Fahrzeugboden befestigbar ist, zu gewährleisten.

Ferner kann vorgesehen sein, dass der Aufnahmebereich des Befestigungsprofils und das Verbindungselement derart geometrisch komplementär ausgebildet sind, dass das Verbindungselement relativ zum Befestigungsprofil linear und/oder rotatorisch bewegbar ist, wodurch das Verbindungselement zu einem Halteelement selbstausrichtbar ist.

Vorzugsweise lässt die geometrisch komplementäre Ausbildung eine Bewegung, insbesondere eine lineare Bewegung, im Bereich zwischen 2 und 10 mm zu.

Ferner ist es günstig, wenn die geometrisch komplementäre Ausbildung eine Rotation im Bereich zwischen 2 und 30 Grad zulässt.

Des Weiteren ist es von Vorteil, wenn das als Seitenführung ausgebildete Seitenwandelement des Befestigungsprofils, gegebenenfalls ein Führungselement des Aufnahmebereichs und ein Führungsabschnitt des Verbindungselements, der von dem Seitenwandelement und/oder dem Führungselement geführt wird, derart geometrisch aufeinander abgestimmt sind, dass das Verbindungselement relativ zum Befestigungsprofil linear, insbesondere entlang einer zweiten Raumrichtung, und/oder rotatorisch, insbesondere um eine Raumrichtung, bewegbar ist, wodurch das Verbindungselement zu einem Halteelement selbstausrichtbar ist.

Auch kann vorgesehen sein, dass das System ein Halteelement, das insbesondere an einem Fahrzeugboden eines Fahrzeuges befestigbar ist, umfasst.

Günstigerweise umfasst das Halteelement einen Aufnahmeteil, welcher von zwei Anschlägen begrenzt ist, wobei vorzugsweise der Aufnahmeteil stiftförmig ausgebildet ist, und wobei vorzugsweise die zwei Anschläge pilzkopfförmig ausgebildet sind.

Ferner ist es möglich, dass der Aufnahmeteil zusammen mit der Aufnahme des Verbindungselements, insbesondere mit dessen zweitem Teilbereich, einen Laufsitz als Passung, insbesondere einen engen Laufsitz, aufweist.

Vorteilhafterweise weist ein Laufsitz eine Passung im Bereich H7/f7 bis F8/h9 und vorzugsweise ein enger Laufsitz eine Passung im Bereich G7/h6 bis H7/g6 auf.

Dementsprechend ist also die Aufnahme des Verbindungselements passgenau auf das Halteelement an einem Fahrzeugboden angepasst.

Des Weiteren kann vorgesehen sein, dass das System ein Profilelement umfasst, das derart am Befestigungsprofil angeordnet ist, dass das Verbindungselement, angeordnet in dem Aufnahmebereich des Befestigungsprofils, gegen ein Lösen vom Befestigungsprofil gesichert ist.

Bevorzugterweise ist das Profilelement derart am Befestigungsprofil angeordnet ist, dass die Raumrichtung, entlang welcher das Verbindungselement zum Einsetzen in den Aufnahmebereich bewegt wird oder um welche das Verbindungselement zum Einsetzen in den Aufnahmebereich geschwenkt wird, gesperrt ist.

Zusammenfasst weist das erfindungsgemäße System folgende Vorteile auf:
- Gewährleistung einer symmetrischen Auflage eines Halteelements an einem Verbindungselement, um der Gefahr einer Trennung von Verbindungselement und Halteelement bei einem Crash entgegenzuwirken;
- Kostenersparnis bei der Herstellung durch Reduzierung der Einzelteile und des Schweißaufwands;
- Verbesserung der Festigkeit des Systems;
- Toleranzausgleich durch bewegliches Verbindungselement
- Materialersparnis durch Verprägung oder Umstellung der Kontaktfläche durch Erzeugung einer Montagekante (Materialstärke vorher t= 8mm; erfindungsgemäß: t= 3+3 bzw.3+4 mm).

Die vorliegende Erfindung kann auch in einem Fahrzeug, insbesondere einem Automobil, angebracht werden.

Bevorzugterweise umfasst ein Fahrzeug, insbesondere ein Automobil:
- eine Sitzeinrichtung mit einem System nach dem dritten Aspekt, und
- einen Fahrzeugboden zur Befestigung der Sitzeinrichtung.

Bevorzugterweise ist an dem Fahrzeugboden das Haltelement befestigt.

Auch ist es bevorzugt, dass das Verbindungselement innerhalb der Aufnahme des Befestigungsprofils relativ bewegbar zum Befestigungsprofil angeordnet ist, wobei vorzugsweise das Verbindungselement in Eingriff an dem Haltelement angeordnet ist. Nachfolgend wird der oben dargestellte Erfindungsgedanke ergänzend mit anderen Worten ausgedrückt.

Dieser Gedanke liegt vorzugsweise - vereinfacht dargestellt - darin, dass das in die zweite Raumrichtung bewegliche Verbindungselement vorzugsweise einen größtmöglichen Ausgleich von Fertigungstoleranzen im eigenen Bauteil sowie dem Fahrzeug selbst ermöglicht.

Durch das bewegliche Verbindungselement kann vorteilhafterweise die Öffnung im Verbindungselement ein Halteelement engst möglich umschließen und somit die Gefahr des Ausreißens des Verbindungselements im Crashfall reduzieren.

Die besondere Umstellung an den Klauenkanten bzw. die Montagekante, welche die Schnittstelle zum Halteelement darstellt, lässt vorzugsweise im Belastungsfall eine Verformung zu, welche die Öffnung bzw. die Aufnahme noch weiter verkleinert, sodass sich diese im Halteelement "verbeißt".

Diese Eigenschaft erlaubt vorzugsweise eine Massereduktion durch Materialeinsparung bei gleicher, in Verbindung mit der engen Öffnung bzw. mit der engen Aufnahme sogar erhöhter Sicherheit gegen das Versagen der Verbindung im Crashfall.

Das Verbindungselement selbst stellt vorzugsweise ein einfaches Montageteil dar, welches günstigerweise durch Kapselung des Systems nicht mehr demontiert werden kann.

Nachstehend wird die Erfindung anhand von Ausführungsbeispielen in Verbindung mit zugehörigen Zeichnungen näher erläutert. Hierbei zeigen schematisch:
- **Fig. 1**: eine räumliche Ansicht eines Systems zum Verbinden eines Befestigungsprofils für eine Sitzvorrichtung eines Fahrzeuges mit einem Halteelement eines Fahrzeugbodens aus dem Stand der Technik;
- **Fig. 2**: eine räumliche Teilansicht eines Befestigungsprofils, eines Verbindungselements und eines halte Elements aus Fig. 1;
- **Fig. 3**: eine räumliche Teilansicht eines Verbindungselements aus dem Stand der Technik an einem Halteelement;
- **Fig. 4**: eine räumliche Ansicht eines erfindungsgemäßen Systems zum Verbinden eines Befestigungsprofils für eine Sitzvorrichtung eines Fahrzeuges mit einem Halteelement eines Fahrzeugbodens nach einem ersten Ausführungsbeispiel;
- **Fig. 5**: eine räumliche Ansicht des Verbindungselements aus Figur 4;
- **Fig. 6**: eine räumliche Teilansicht eines erfindungsgemäßen Befestigungsprofils und eines darin eingesetzten, erfindungsgemäßen Verbindungselements gemäß dem ersten Ausführungsbeispiel nach Figur 4;
- **Fig. 7**: eine räumliche Teilansicht des erfindungsgemäßen Verbindungselements aus Figuren 4, 5 und 6 an einem Halteelement;
- **Fig. 8**: eine räumliche Ansicht eines erfindungsgemäßen Systems zum Verbinden eines Befestigungsprofils für eine Sitzvorrichtung eines Fahrzeuges mit einem Halteelement eines Fahrzeugbodens nach einem zweiten Ausführungsbeispiel;
- **Fig. 9**: eine räumliche Ansicht des Verbindungselements aus Figur 8;
- **Fig. 10**: eine räumliche Teilansicht eines erfindungsgemäßen Befestigungsprofils und eines darin eingesetzten, erfindungsgemäßen Verbindungselements gemäß dem zweiten Ausführungsbeispiel aus Figur 8;
- **Fig. 11**: eine räumliche Teilansicht des erfindungsgemäßen Verbindungselements an einem Halteelement;
- **Fig. 12**: eine räumliche Ansicht eines erfindungsgemäßen Systems zum Verbinden eines Befestigungsprofils für eine Sitzvorrichtung eines Fahrzeuges mit einem Halteelement eines Fahrzeugbodens nach einem dritten Ausführungsbeispiel;
- **Fig. 13**: eine seitliche Teilansicht des Systems aus Figur 12;
- **Fig. 14**: eine räumliche Ansicht des Verbindungselements aus Figuren 12 und 13;
- **Fig. 15**: eine räumliche Teilansicht des erfindungsgemäßen Befestigungsprofils gemäß dem dritten Ausführungsbeispiel aus Figur 12;
- **Fig. 16**: eine räumliche Teilansicht des Befestigungsprofils aus Figur 16 aus einer weiteren Perspektive;
- **Fig. 17**: eine seitliche Schnittansicht eines Teils des Systems aus Figur 12;
- **Fig. 18**: eine Draufsicht auf die Darstellung nach Figur 17;
- **Fig. 19**: eine Draufsicht auf Figur 17 zusammen mit einem Halteelement;
- **Fig. 20**: eine seitliche Ansicht auf die Darstellung nach Figur 19; und
- **Fig. 21**: eine räumliche Ansicht eines nicht erfindungsgemäßen Verbindungselements;
- **Fig. 22**: eine räumliche Ansicht eines nicht erfindungsgemäßen Verbindungselements; und
- **Fig. 23**: einen Vergleich eines Verbindungselements aus dem Stand der Technik mit dem erfindungsgemäßen Verbindungselement.

In der nachfolgenden Beschreibung werden gleiche Bezugszeichen für gleiche Gegenstände verwendet.

Figuren 1 bis 3 zeigen eine räumliche Ansicht eines Systems zum Verbinden eines Befestigungsprofils für eine Sitzvorrichtung eines Fahrzeuges mit einem Halteelement eines Fahrzeugbodens aus dem Stand der Technik.

Genannte Figuren wurden bereits eingangs diskutiert, sodass an dieser Stelle von einer erneuten Diskussion abgesehen wird.

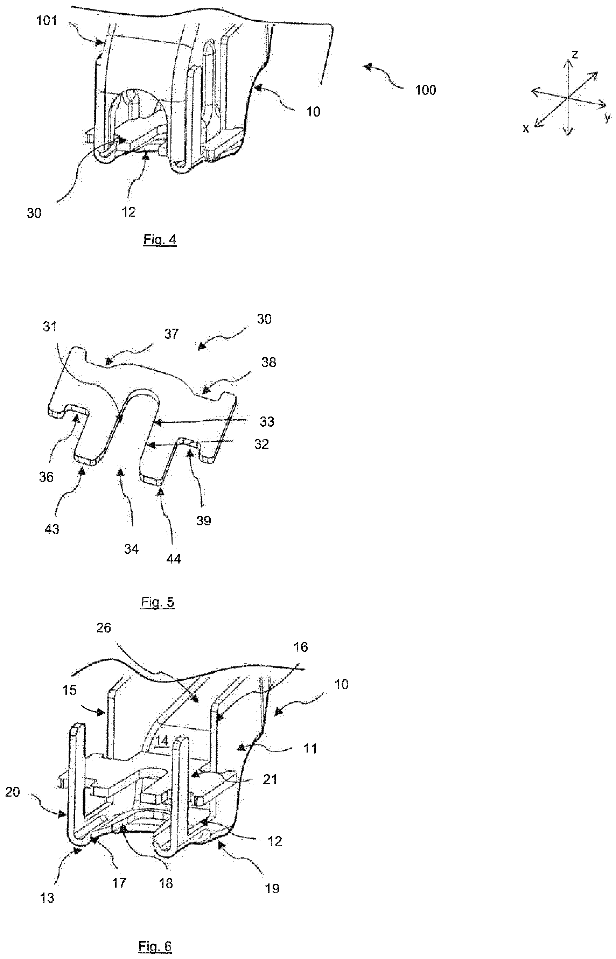

Figur 4 zeigt eine räumliche Ansicht eines erfindungsgemäßen Systems 100 zum Verbinden eines Befestigungsprofils 10 für eine Sitzvorrichtung eines Fahrzeuges mit einem Halteelement 50 eines Fahrzeugbodens nach einem ersten Ausführungsbeispiel.

Genauer dargestellt zeigt Figur 4 ein System 100 mit einem Befestigungsprofil 10, einem Verbindungselement 30 und einem Profilelement 101.

Das Verbindungselement 30 ist bewegbar zum Befestigungsprofil 10 und im Aufnahmebereich 12 des Befestigungsprofils 10 angeordnet, um eine Selbstausrichtung des Verbindungselements 30 zu einem Halteelement 50, das an einem Fahrzeugboden befestigbar ist, zu gewährleisten.

Das Profilelement 101 ist derart am Befestigungsprofil 10 angeordnet, dass das Verbindungselement 30, das in dem Aufnahmebereich 12 des Befestigungsprofils 10 angeordnet ist, gegen ein Lösen vom Befestigungsprofil 10 gesichert ist.

Mit anderen Worten ausgedrückt, ist das Profilelement 101 derart am Befestigungsprofil 10 angeordnet bzw. mit diesem verschweißt, dass die erste Raumrichtung Z, entlang welcher das Verbindungselement 30 zum Einsetzen in den Aufnahmebereich 12 bewegt wird, gesperrt ist (vergleiche insbesondere Figuren 4 und 6).

Entlang der zweiten Raumrichtung Y ist das Verbindungselement 30 hingegen bewegbar, um sich durch Veränderung seiner relativen Position zum Befestigungsprofil 10 an die Position eines Halteelements 50 anzupassen.

Figur 5 zeigt eine räumliche Ansicht des Verbindungselements 30 aus Figur 4.

Genauer gesagt, zeigt Figur 5 ein Verbindungselement 30 zum lösbaren Verbinden eines Befestigungsprofils 10 an einem Halteelement 50 eines Fahrzeugbodens.

Dabei hat das Verbindungselement 30 eine Aufnahme 31 zum Einschieben eines Halteelements 50.

Die Aufnahme 31 ist als Ausnehmung ausgebildet und erstreckt sich in das Verbindungselement 30 derart von außen nach innen, dass ein Halteelement 50 in die Aufnahme 31 von außen in das Verbindungselement 30 einschiebbar ist. Mit anderen Worten ausgedrückt, ist die Aufnahme 31 ähnlich einem offenen Langloch ausgebildet.

Das Verbindungselement 30 ist ferner plattenförmig ausgebildet und durch Stanzen hergestellt. Die Materialstärke des Verbindungselements 30 liegt im Bereich zwischen 2 und 5 mm, bevorzugterweise im Bereich zwischen 3 und 4 mm.

Wie Figur 5 ferner zu entnehmen, hat die Aufnahme 31 zwei Teilbereiche 32, 33, wobei ein erster Teilbereich 32 als Einführhilfe für das vereinfachte Einschieben eines Halteelements 50 eines Fahrzeugbodens in das Verbindungselement 30 ausgebildet ist.

Demgegenüber ist ein zweiter Teilbereich 33 als Montagebereich ausgebildet, in den ein Halteelement 50 eines Fahrzeugbodens zur Befestigung einschiebbar und anordenbar ist.

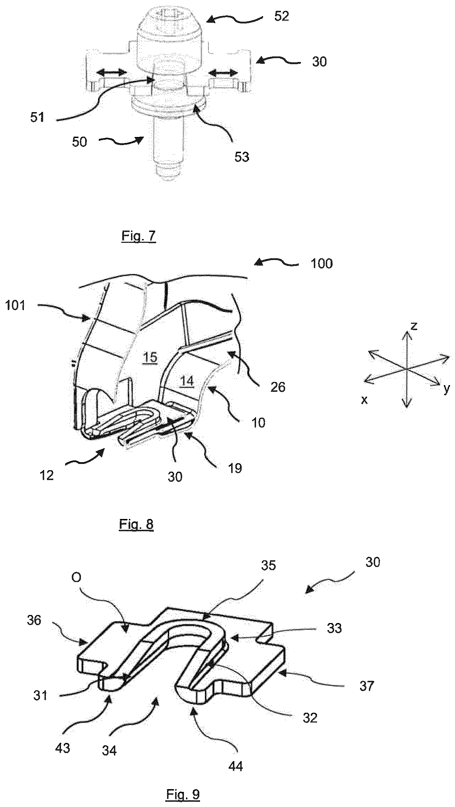

Hierbei ist die Aufnahme 31 passgenau an das Halteelement 50 (aus Figur 7) angepasst, wobei die Aufnahme 31, insbesondere der zweite Teilbereich 33, zusammen mit dem Halteelement 50 einen Laufsitz oder einen engen Laufsitz als Passung aufweist (vgl. Figur 7).

Bei einem Laufsitz handelt es sich um eine Passung im Bereich H7/f7 bis F8/h9 und bei einem engen Laufsitz um eine Passung im Bereich G7/h6 bis H7/g6.

Wie Figur 5 ferner zeigt, hat der erste Teilbereich 32 eine Öffnung 34 zum Einschieben des Halteelements 50 in das Verbindungselement 30.

Des Weiteren zeigt Figur 5, dass das Verbindungselement 30 vier Führungsabschnitte 36, 37, 38, 39 zum Führen und Positionieren innerhalb des Aufnahmebereichs 12 des Befestigungsprofils 10 umfasst.

Die vier Führungsabschnitte 36, 37, 38, 39 sind jeweils als U-förmiger Teilabschnitt seitlich am Verbindungselement 30 ausgebildet, um Führungselemente 20, 21 des Aufnahmebereichs 12 und als Seitenführung ausgebildete Seitenwandelemente 15, 16 des Seitenwandteils 11 teilweise zu umschließen. Dadurch kann die relative Bewegung des Verbindungselements 30 gegenüber dem Befestigungsprofil 10 begrenzt werden.

Auch zeigt Figur 5, dass das Verbindungselement 30 seitlich neben der Öffnung 34 der Aufnahme 31 Zentriernasen 43, 44 zum Einführen des Halteelements 50 umfasst.

Figur 6 zeigt eine räumliche Teilansicht eines erfindungsgemäßen Befestigungsprofils 10 und des darin eingesetzten, erfindungsgemäßen Verbindungselements 30 gemäß dem ersten Ausführungsbeispiel nach Figur 4.

Genauer dargestellt zeigt Figur 6 ein Befestigungsprofil 10 zur Befestigung einer Sitzvorrichtung eines Fahrzeuges an einem Fahrzeugboden, insbesondere an einem Halteelement 50 eines Fahrzeugbodens.

Das Befestigungsprofil 10 hat ein Seitenwandteil 11, insbesondere das erste Seitenwandelement 14 des Seitenwandteils 11, das sich im Wesentlichen in einer ersten Ebene Y-Z erstreckt.

Auch hat das Befestigungsprofil 10 einen Aufnahmebereich 12 zum verschiebbaren Aufnehmen des Verbindungselements 30, das der Verbindung des Befestigungsprofils 10 mit einem Halteelement 50 dient.

Der Aufnahmebereich 12 hat als Auflage für das Verbindungselement 30 ein Bodenelement 13, das sich im Wesentlichen in einer zweiten Ebene X-Y erstreckt, sodass das Befestigungsprofil 10 im Querschnitt L-förmig ausgebildet ist.

Dabei ist, wie aus Figur 6 hervorgeht, die Schnittrichtung zur Erzeugung des Querschnitts gleichorientiert zur Anschlussrichtung (verläuft in die dritte Raumrichtung X), in welcher sich das Befestigungsprofil 10 zur Anbindung am Rahmen einer Sitzvorrichtung erstreckt. Anders ausgedrückt, ist das Befestigungsprofil 10 im Querschnitt zur Anschlussrichtung für die Anbindung am Rahmen einer Sitzvorrichtung L-förmig ausgebildet.

Hierbei stellt der Aufnahmebereich 12 eine Auflagefläche in Form des Bodenelements 13 für das Verbindungselement 30 in der zweiten Ebene X-Y zur Verfügung, sodass dieses auf dem Bodenelement 13 aufliegen kann und auf diesem relativ verschiebbar zum Befestigungsprofil 10 angeordnet ist.

Gemäß Figur 6 ist der Aufnahmebereich 12 derart ausgebildet, dass das Verbindungselement 30 in den Aufnahmebereich 12 entlang der ersten Raumrichtung Z einsetzbar ist, und dass das Verbindungselement 30 innerhalb des Aufnahmebereichs 12 und relativ zum Befestigungsprofil 10 in bzw. entlang der zweiten Raumrichtung Y und linear bewegbar ist.

Wie bereits angedeutet, bildet das Seitenwandteil 11 zusammen mit dem Bodenelement 13 den Aufnahmebereich 12 aus, in welchem das Verbindungselement 30 bewegbar zum Befestigungsprofil 10 einlegbar ist.

Das Seitenwandteil 11 ist U-förmig ausgebildet und hat ein erstes Seitenwandelement 14 als Rückseite, das das Befestigungsprofil 10 mit einem Rahmen einer Sitzvorrichtung verbindet und das sich im Wesentlichen in der ersten Ebene Y-Z erstreckt.

Genauer geschildert, erstreckt sich das erste Seitenwandelement 14 im Wesentlichen in der ersten Ebene Y-Z und verbindet in einem geschwungenen Verlauf (im Querschnitt bzw. in X-Z Ebene gesehen) zwei zweite Ebenen X-Y, nämlich das Bodenelement 13 mit einem Rahmenteil 26 auf unterschiedlichen Höhen miteinander.

Ferner umfasst das Seitenwandteil 11 ein zweites Seitenwandelement 15 und ein drittes Seitenwandelement 16 jeweils als Seitenführung für das Verbindungselement 30.

Diese beiden Seitenwandteile 15, 16 hingegen erstrecken sich im Wesentlichen in einer dritten Ebene X-Z, wie Figur 6 zeigt.

Wie bereits angedeutet, bilden das erste, zweite und dritte Seitenwandelement 14, 15, 16 zusammen eine U-Form, wobei das Bodenelement 13 und die Seitenwandelemente 14, 15, 16 einstückig ausgebildet sind.

Figur 6 zeigt ferner, dass das Bodenelement 13 einen Bodenteil 17 und einen Bodenerhöhungsteil 18 umfasst, welcher die Höhe des in den Aufnahmebereich 12 einlegbaren Verbindungselements 30 relativ zum Seitenwandteil 11 bestimmt.

Der Bodenteil 17 ist mit dem Seitenwandteil 11 zur Aussteifung verbunden, wobei sich der Bodenerhöhungsteil 18 vom Bodenteil 17 weg und in Richtung des Aufnahmebereichs 12 erstreckt, um die Höhe des Verbindungselements 30 innerhalb des Befestigungsprofils 10 zu bestimmen.

Der Bodenerhöhungsteil 18 ist durch Umformen des Bodenteils 17, wie zum Beispiel durch Prägen aus dem Bodenteil 17, hergestellt.

Der Bodenerhöhungsteil 18 und der Bodenteil 17 sind U-förmig ausgebildet, wodurch ein Haltelement 50 entlang einer dritten Raumrichtung X in das Befestigungsprofil 10 einführbar ist.

Hierbei erstrecken sich laut Figur 6 die beiden gleichorientierten Schenkel des U-förmigen Bodenerhöhungsteil 18 und die Schenkel des U-förmigen Bodenteils 17 in die dritte bzw. entlang der dritten Raumrichtung X. Die U-förmige Ausgestaltung erlaubt es, wie bereits erwähnt, zum einen eine Auflage für das Verbindungselement 30 zu schaffen und zum anderen ein Halteelement 50 in das Befestigungsprofil 10 einzuschieben.

Aus Figur 6 geht zudem hervor, dass das Bodenelement 13 einen Bodenverspannungsteil 19 umfasst, welcher sich vom Bodenteil 17 in entgegengesetzte Richtung zum Aufnahmebereich 12 weg erstreckt, um eine Anlagefläche zum Verspannen gegen einen Fahrzeugboden zu bilden.

Auch zeigt Figur 6, dass der Aufnahmebereich 12 zwei Führungselemente 20, 21 zur seitlichen Führung eines Verbindungselements 30 hat.

Die zwei Führungselemente 20, 21 erstrecken sich säulenartig entlang der ersten Raumrichtung Z vom Bodenelement 13 weg, um zusammen mit dem Seitenwandteil 11 des Befestigungsprofils 10 bzw. zusammen mit dem zweiten und dritten als Seitenführung ausgebildeten Seitenwandelement 15, 16 des Seitenwandteils 11 eine Führung zum seitlichen Verschieben eines Verbindungselements 30 innerhalb des Aufnahmebereichs 12 zu bilden.

Mit anderen Worten ausgedrückt, beschränken das erste, zweite und dritte Seitenwandelement 14, 15, 16 und die Führungselemente 20, 21 in Kombination mit der räumlichen Ausgestaltung des Verbindungselements 30 die relative Bewegung des Verbindungselements 30 zum Befestigungsprofil 10.

Gemäß Figur 6 ist jedes Führungselement 20, 21 gegenüberliegend einem Seitenwandelement 15, 16 des Seitenwandteils 11 und beanstandet zum Seitenwandelement 15, 16 angeordnet.

Figur 7 zeigt eine räumliche Teilansicht des erfindungsgemäßen Verbindungselements 30 aus Figuren 4, 5 und 6 an einem Halteelement 50.

Mit anderen Worten ausgedrückt zeigt Figur 7, dass das System 100 ein Halteelement 50 hat, das an einem Fahrzeugboden (nicht dargestellt) eines Fahrzeuges befestigbar ist.

Das Halteelement 50 hat einen Aufnahmeteil 51, welcher von zwei Anschlägen 52, 53 begrenzt ist.

Der Aufnahmeteil 51 ist dabei stiftförmig ausgebildet, während die zwei Anschläge 52, 53 pilzkopfförmig ausgebildet sind.

Der Aufnahmeteil 51 bildet zusammen mit der Aufnahme 31 des Verbindungselements 30 bzw. mit dessen zweitem Teilbereich 33 einen Laufsitz oder auch einen engen Laufsitz als Passung.

Hierbei umfasst ein Laufsitz eine Passung im Bereich H7/f7 bis F8/h9 und ein enger Laufsitz eine Passung im Bereich G7/h6 bis H7/g6.

Zusammengefasst zeigen also die Figuren 4 bis 7, dass der Aufnahmebereich 12 des Befestigungsprofils 10 und das Verbindungselement 30 derart geometrisch komplementär ausgebildet sind, dass das Verbindungselement 30 relativ zum Befestigungsprofil 10 linear entlang der zweiten Raumrichtung Y bewegbar ist, wodurch das Verbindungselement 30 zu einem Halteelement 50 selbstausrichtbar ist.

Die geometrisch komplementäre Ausbildung lässt dabei eine Bewegung, insbesondere eine lineare Bewegung, im Bereich zwischen 2 und 10 mm zu.

Nochmals mit anderen Worten beschrieben, sind das als Rückseite ausgebildete Seitenwandelement 14 des Befestigungsprofils 10 zusammen mit dem zweiten und dritten als Seitenführung ausgebildeten Seitenwandelement 15, 16, die zwei Führungselemente 20, 21 des Aufnahmebereichs 12 und die Führungsabschnitte 36, 37, 38, 39 des Verbindungselements 30, die von den zwei Führungselementen 20, 21 und den Seitenwandelementen 15, 16 geführt werden, derart geometrisch aufeinander abgestimmt, dass das Verbindungselement 30 relativ zum Befestigungsprofil 10 linear entlang der zweiten Raumrichtung Y bewegbar ist, wodurch das Verbindungselement 30 zu dem Halteelement 50 selbstausrichtbar ist.

Aufgrund der Bewegung entlang der zweiten Raumrichtung Y können Montagetoleranzen kompensiert werden, sodass das Verbindungselement 30 durch Bewegung eine Position einnehmen kann, die das Aufnehmen des passgenauen Halteelements 50 erlaubt.

Figuren 8 bis 11 zeigen ein zweites Ausführungsbeispiel der vorliegenden Erfindung, das diverse Gemeinsamkeiten mit dem ersten Ausführungsbeispiel hat.

So zeigt Figur 8 eine räumliche Ansicht eines erfindungsgemäßen Systems 100 zum Verbinden eines Befestigungsprofils 10 für eine Sitzvorrichtung eines Fahrzeuges mit einem Halteelement 50 eines Fahrzeugbodens nach einem zweiten Ausführungsbeispiel.

Das System 100 setzt sich aus einem Befestigungsprofil 10, einem Verbindungselement 30 und einem Profilelement 101 zusammen, das derart am Befestigungsprofil 10 angeordnet ist, dass das Verbindungselement 30, das in dem Aufnahmebereich 12 des Befestigungsprofils 10 angeordnet ist, gegen ein Lösen vom Befestigungsprofil 10 gesichert ist.

Mit anderen Worten ausgedrückt, ist das Profilelement 101 derart am Befestigungsprofil 10 angeordnet bzw. mit diesem verschweißt, dass die dritte Raumrichtung X, um welche das Verbindungselement 30 zum Einsetzen in den Aufnahmebereich 12 geschwenkt wird, gesperrt ist.

Gleichwohl ist das Verbindungselement 30 bewegbar zum Befestigungsprofil 10 und im Aufnahmebereich 12 des Befestigungsprofils 10 angeordnet, um eine Selbstausrichtung des Verbindungselements 30 zu einem Halteelement 50, das an einem Fahrzeugboden befestigbar ist, zu gewährleisten.

Figur 9 zeigt eine räumliche Ansicht des Verbindungselements 30 aus Figur 8.

Das Verbindungselement 30 zum lösbaren Verbinden des Befestigungsprofils 10 an einem Halteelement 50 eines Fahrzeugbodens hat dabei eine Aufnahme 31 zum Einschieben eines Halteelements 50 eines Fahrzeugbodens.

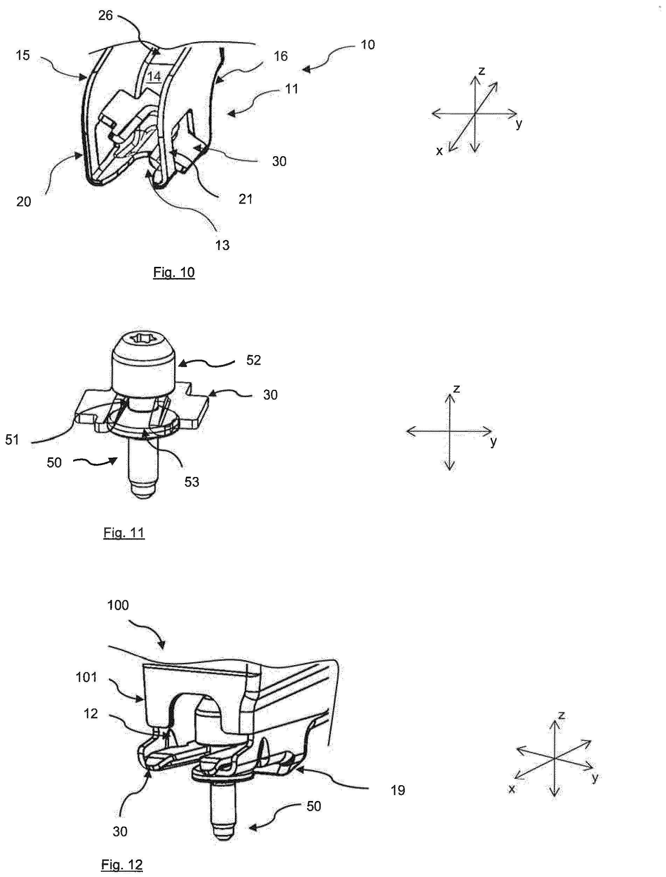

Die Aufnahme 31 ist als Ausnehmung ausgebildet und erstreckt sich in das Verbindungselement 30 derart von außen nach innen, dass ein Halteelement 50 in die Aufnahme 31 von außen in das Verbindungselement 30 einschiebbar ist (vergleiche insbesondere Figur 11).

Um Herstellungskosten zu sparen und eine verbesserte Kraftführung durch das Verbindungselement 30 zu gewährleisten, ist dieses durch Stanzen hergestellt.

Auch zeigt Figur 9, dass das Verbindungselement 30 plattenförmig ausgebildet ist, und eine Materialstärke im Bereich zwischen 2 und 5 mm, bevorzugterweise im Bereich zwischen 3 und 4 mm, aufweist.

Ferner ist zu erkennen, dass die Aufnahme 31 ähnlich einem offenen Langloch ausgebildet ist und zwei Teilbereiche 32, 33 umfasst.

Ein erster Teilbereich 32 ist als Einführhilfe für das vereinfachte Einschieben eines Halteelements 50 eines Fahrzeugbodens in das Verbindungselement 30 ausgebildet, wobei ein zweiter Teilbereich 33 als Montagebereich ausgebildet ist, in den ein Halteelement 50 zur Befestigung einschiebbar und anordenbar ist (vergleiche Figur 11).

Der erste Teilbereich 32 hat eine Öffnung 34 zum Einschieben eines Halteelements 50 in das Verbindungselement 30.

Des Weiteren zeigt Figur 9, dass das Verbindungselement 30 eine Montagekante 35 umfasst, die aus der Oberfläche O des Verbindungselements 30 hervorragt und die durch Umformen hergestellt ist, wobei die Aufnahme 31 durch Ausstanzen erstellt ist.

Die Montagekante 35 umgibt die Aufnahme 31 als Rand und ist teilweise rampenförmig ausgebildet.

Dabei steigt die Montagekante 35 von außen nach innen, bezogen auf das Verbindungselement 30, an, wobei die Montagekante 35 beginnend am zweiten Teilbereich 33 hin zur Öffnung 34 des ersten Teilbereichs 32 keilförmig zuläuft.

Somit weist die Montagekante 35 am zweiten Teilbereich 33 ihre maximale Höhe und an der Öffnung 34 des ersten Teilbereichs 32 ihre minimale Höhe auf.

Mit anderen Worten ausgedrückt, umfasst lediglich der erste Teilbereich 32 die rampenförmig ausgebildete Montagekante 35, mit welcher ein vereinfachtes Verspannen des Verbindungselement 30 innerhalb des Befestigungsprofils 10 möglich ist.

Wie Figur 9 ferner zeigt, hat das Verbindungselement 30 zwei Führungsabschnitte 36, 37 zum Führen und Positionieren innerhalb eines Aufnahmebereichs 12 des Befestigungsprofils 10.

Die zwei Führungsabschnitte 36, 37 ragen seitlich aus dem Verbindungselement 30 als Nase hervor, um in einem Seitenwandelement 15, 16 des Befestigungsprofils 10 geführt zu werden.

Auch zeigt Figur 9, dass das Verbindungselement 30 seitlich neben der Öffnung 34 der Aufnahme 31 Zentriernasen 43, 44 zum vereinfachten Einführen eines Halteelements 50 am Fahrzeugboden hat.

Figur 10 zeigt eine räumliche Teilansicht eines erfindungsgemäßen Befestigungsprofils 10 und des darin eingesetzten, erfindungsgemäßen Verbindungselements 30 gemäß dem zweiten Ausführungsbeispiel aus Figur 8.

Hierbei hat das Befestigungsprofil 10 ein Seitenwandteil 11, insbesondere das erste Seitenwandelement 14 des Seitenwandteils 11, das sich im Wesentlichen in einer ersten Ebene Y-Z erstreckt.

Auch hat das Befestigungsprofil 10 einen Aufnahmebereich 12 zum verschiebbaren Aufnehmen des Verbindungselements 30, das der Verbindung des Befestigungsprofils 10 mit einem Halteelement 50 eines Fahrzeugbodens dient.

Vereinfacht dargestellt, umfasst der Aufnahmebereich 12 ein Bodenelement 13 als Auflage für das Verbindungselement 30, wobei sich das Bodenelement 13 im Wesentlichen in einer zweiten Ebene X-Y erstreckt, sodass das Befestigungsprofil 10 im Querschnitt L-förmig ausgebildet ist.

Dabei ist, wie aus Figur 10 hervorgeht, die Schnittrichtung zur Erzeugung des Querschnitts gleichorientiert zur Anschlussrichtung (verläuft in die dritte Raumrichtung X), in welcher sich das Befestigungsprofil 10 zur Anbindung am Rahmen einer Sitzvorrichtung erstreckt. Anders ausgedrückt, ist das Befestigungsprofil 10 im Querschnitt zur Anschlussrichtung für die Anbindung am Rahmen einer Sitzvorrichtung L-förmig ausgebildet.

Hierbei stellt der Aufnahmebereich 12 eine Auflagefläche in Form des Bodenelements 13 für das Verbindungselement 30 in der zweiten Ebene X-Y zur Verfügung, sodass dieses auf dem Bodenelement 13 aufliegen kann und auf diesem relativ verschiebbar zum Befestigungsprofil 10 angeordnet ist.

Um nun das Verbindungselement in den Aufnahmebereich 12 einzubringen, ist dieser derart ausgebildet, dass das Verbindungselement 30 in den Aufnahmebereich 12 durch Drehung um die dritte Raumrichtung X einsetzbar ist, und dass das Verbindungselement 30 nach dem Einsetzen innerhalb des Aufnahmebereichs 12 und relativ zum Befestigungsprofil 10 entlang der zweiten Raumrichtung Y linear bewegbar ist.

Das Seitenwandteil 11 bildet zusammen mit dem Bodenelement 13 den Aufnahmebereich 12 aus, in welchem das Verbindungselement 30 bewegbar zum Befestigungsprofil 10 einlegbar ist.

Das Seitenwandteil 11 ist U-förmig ausgebildet und hat ein erstes Seitenwandelement 14 als Rückseite, wobei das erste Seitenwandelement 14 das Befestigungsprofil 10 mit einem Rahmen einer Sitzvorrichtung verbindet und wobei sich das erste Seitenwandelement 14 im Wesentlichen in der ersten Ebene Y-Z erstreckt.

Genauer geschildert, erstreckt sich das erste Seitenwandelement 14 im Wesentlichen in der ersten Ebene Y-Z und verbindet in einem geschwungenen Verlauf (im Querschnitt bzw. in X-Z Ebene gesehen) zwei zweite Ebenen X-Y, nämlich das Bodenelement 13 mit einem Rahmenteil 26 auf unterschiedlichen Höhen miteinander.

Ferner hat das Seitenwandteil 11 ein zweites 15 und ein drittes Seitenwandelement 16 jeweils als Seitenführung für das Verbindungselement 30, wobei das erste, zweite und dritte Seitenwandelement 14, 15, 16 zusammen eine U-Form bilden.

Hierbei erstrecken sich das zweite 15 und das dritte Seitenwandelement 16 im Wesentlichen in der dritten Ebene X-Z, wie Figur 10 zeigt.

Das Bodenelement 13 und die Seitenwandelemente 14, 15, 16 sind einstückig ausgebildet.

Wie Figur 10 zu entnehmen, hat das Bodenelement 13 einen Bodenteil 17, der mit dem Seitenwandteil 11 zur Aussteifung verbunden ist.

Ferner ist der Bodenteil 17 U-förmig ausgebildet, wobei sich die beiden gleichorientierten Schenkel des U-förmigen Bodenteils 17 in die dritte Raumrichtung X erstrecken, um eine Aufnahme des Halteelements 50 im Verbindungselement 30 zu ermöglichen bzw. um ein Einführen des Halteelements 50 entlang der dritten Raumrichtung X in das Befestigungsprofil 10 zu ermöglichen.

Die U-förmige Ausgestaltung erlaubt es also, zum einen eine Auflage für das Verbindungselement 30 zu schaffen und zum anderen ein Halteelement 50 in das Befestigungsprofil 10 einzuschieben.

Auch umfasst das Bodenelement 13 einen Bodenverspannungsteil 19 (vgl. Figur 8), welcher sich vom Bodenteil 17 in entgegengesetzte Richtung zum Aufnahmebereich 12 weg erstreckt, um eine Anlagefläche zum Verspannen gegen einen Fahrzeugboden zu bilden.

Ferner zeigt Figur 10, dass der Aufnahmebereich 12 zwei Führungselemente 20, 21 umfasst, die zusammen mit den Seitenwandelementen 15, 16 des Seitenwandteils 11 eine Führung zum seitlichen Verschieben des Verbindungselements 30 innerhalb des Aufnahmebereichs 12 bilden.

Die zwei Führungselemente 20, 21 erstrecken sich säulenartig vom Bodenelement 13 weg, um zusammen mit dem Seitenwandteil 11 des Befestigungsprofils 10 bzw. zusammen mit dem zweiten und dritten als Seitenführung ausgebildeten Seitenwandelement 15, 16 des Seitenwandteils 11 eine Führung zum seitlichen Verschieben des Verbindungselements 30 innerhalb des Aufnahmebereichs 12 zu bilden.

Hierbei erstrecken sich die zwei Führungselemente 20, 21 säulenartig entlang der ersten Raumrichtung Z und sind jeweils gegenüberliegend einem Seitenwandelement 15, 16 des Seitenwandteils 11 und beanstandet zum jeweiligen Seitenwandelement 15, 16 angeordnet.

Im vorliegenden Ausführungsbeispiel sind die zwei Führungselemente 20, 21 mit dem Seitenwandteil 11 bzw. mit dem zweiten / dritten Seitenwandelement 15, 16 des Seitenwandteils 11 einstückig ausgebildet, um eine fensterartige Aufnahmestelle zusammen mit dem Bodenelement 13 zu bilden.

Mit anderen Worten ausgedrückt, hat das Seitenwandteil 11 bzw. dessen zweites und drittes Seitenwandelement 15, 16 einen Ausschnitt, um zusammen mit dem Bodenelement eine fensterartige Aufnahmestelle für einen Teil eines Verbindungselements zu bilden.

Des Weiteren geht aus Figur 10 hervor, dass der Aufnahmebereich 12 des Befestigungsprofils 10 und das Verbindungselement 30 derart geometrisch komplementär ausgebildet sind, dass das Verbindungselement 30 relativ zum Befestigungsprofil 10 linear bewegbar ist, wodurch das Verbindungselement 30 zu einem Halteelement 50 selbstausrichtbar ist. Hierbei ist das Verbindungselement 30 entlang der zweiten Raumrichtung Y relativ zum Befestigungsprofil 10 linear bewegbar.

Im vorliegenden Ausführungsbeispiel nach Figuren 8 bis 11 lässt die geometrisch komplementäre Ausbildung eine lineare Bewegung im Bereich zwischen 2 und 10 mm zu.

Noch konkreter ausgedrückt, sind das als Rückseite ausgebildete Seitenwandelement 14 des Befestigungsprofils 10 zusammen mit dem zweiten und dritten als Seitenführung ausgebildeten Seitenwandelement 15, 16, die Führungselemente 20, 21 des Aufnahmebereichs 12 und die Führungsabschnitte 36, 37 des Verbindungselements 30, die von den Seitenwandelementen 15, 16 und den Führungselementen 20, 21 geführt werden, derart geometrisch aufeinander abgestimmt, dass das Verbindungselement 30 relativ zum Befestigungsprofil 10 linear bewegbar ist, insbesondere entlang der zweiten Raumrichtung Y. Dadurch ist das Verbindungselement 30 zu einem Halteelement 50 selbstausrichtbar.

Figur 11 zeigt eine räumliche Teilansicht des erfindungsgemäßen Verbindungselements 30 an einem Halteelement 50.

Wie bereits erwähnt, hat das System 100 ein Halteelement 50, das an einem Fahrzeugboden eines Fahrzeuges befestigbar ist.

Das Halteelement 50 hat einen Aufnahmeteil 51, welcher von zwei Anschlägen 52, 53 begrenzt ist, wobei der Aufnahmeteil 51 stiftförmig ausgebildet ist und die zwei Anschläge 52, 53 pilzkopfförmig ausgebildet sind.

Der Aufnahmeteil 51 weist zusammen mit der Aufnahme 31 des Verbindungselements 30 bzw. mit dessen zweitem Teilbereich 33 einen Laufsitz als Passung, insbesondere einen engen Laufsitz, auf.

Ein Laufsitz hat eine Passung im Bereich H7/f7 bis F8/h9, wobei vorzugsweise ein enger Laufsitz eine Passung im Bereich G7/h6 bis H7/g6 aufweist.

Dementsprechend ist also die Aufnahme 31 des Verbindungselements 30 passgenau auf das Halteelement 50 an einem Fahrzeugboden angepasst.

Aufgrund der Bewegung entlang der zweiten Raumrichtung Y können Montagetoleranzen kompensiert werden, sodass das Verbindungselement 30 durch Bewegung eine Position einnehmen kann, die das Aufnehmen des passgenauen Halteelements 50 erlaubt.

Figur 12 zeigt eine räumliche Ansicht eines erfindungsgemäßen Systems 100 zum Verbinden eines Befestigungsprofils 10 für eine Sitzvorrichtung eines Fahrzeuges mit einem Halteelement 50 eines Fahrzeugbodens nach einem dritten Ausführungsbeispiel.

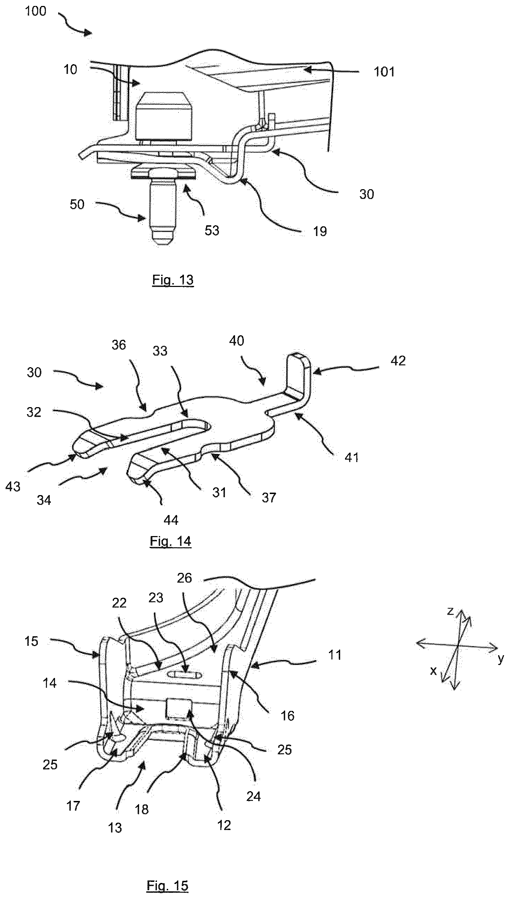

Figur 13 zeigt eine seitliche Teilansicht des Systems aus Figur 12.

Nachfolgend werden der Einfachheit halber und Kürze wegen die Figuren 12 und 13 gemeinsam beschrieben.

So zeigen beide Figuren ein System 100 zum Verbinden eines Befestigungsprofils 10 für eine Sitzvorrichtung eines Fahrzeuges mit einem Befestigungsprofil 10, einem Verbindungselement 30, einem Profilelement 101 und einem Halteelement 50.

Hierbei ist das Verbindungselement 30 bewegbar zum Befestigungsprofil 10 und im Aufnahmebereich 12 des Befestigungsprofils 10 angeordnet, um eine Selbstausrichtung des Verbindungselements 30 zu einem Halteelement 50, das an einem Fahrzeugboden befestigbar ist, zu gewährleisten.

Wie in Figuren 12 und 13 zu erkennen, sind der Aufnahmebereich 12 des Befestigungsprofils 10 und das Verbindungselement 30 derart geometrisch komplementär ausgebildet, dass das Verbindungselement 30 relativ zum Befestigungsprofil 10 rotatorisch bewegbar ist. Dadurch ist das Verbindungselement 30 zu dem Halteelement 50 selbstausrichtbar.

Die geometrisch komplementäre Ausbildung lässt eine Rotation im Bereich zwischen 2 und 30 Grad zu.

Das Halteelement 50 umfasst einen Aufnahmeteil 51, welcher von zwei Anschlägen 52, 53 begrenzt ist (siehe Figur 13), wobei der Aufnahmeteil 51 stiftförmig ausgebildet ist und die zwei Anschläge 52, 53 pilzkopfförmig ausgebildet sind.

Wie bei den vorangegangenen Ausführungsbeispielen hat der Aufnahmeteil 51 zusammen mit der Aufnahme 31 des Verbindungselements 30 einen Laufsitz als Passung, insbesondere einen engen Laufsitz.

Hierbei umfasst ein Laufsitz eine Passung im Bereich H7/f7 bis F8/h9 und vorzugsweise ein enger Laufsitz eine Passung im Bereich G7/h6 bis H7/g6.

Dementsprechend ist also die Aufnahme 31 des Verbindungselements 30 passgenau auf das Halteelement 50 an einem Fahrzeugboden angepasst.

Wie bereits erwähnt, umfasst das System 100 ein Profilelement 101, das derart am Befestigungsprofil 10 angeordnet bzw. mit diesem verschweißt ist, dass das Verbindungselement 30, das in dem Aufnahmebereich 12 des Befestigungsprofils 10 angeordnet, gegen ein Lösen vom Befestigungsprofil 10 gesichert ist.

Das Profilelement 101 ist dabei derart am Befestigungsprofil 10 angeordnet, dass die zweite Raumrichtung Y, um welche das Verbindungselement 30 zum Einsetzen in den Aufnahmebereich 12 geschwenkt wird, gesperrt ist.

Figur 14 zeigt eine räumliche Ansicht des Verbindungselements 30 aus Figuren 13 und 14.

Das Verbindungselement 30 hat eine Aufnahme 31 zum Einschieben des Halteelements 50, wobei die Aufnahme 31 als Ausnehmung ausgebildet ist und sich in das Verbindungselement 30 derart von außen nach innen erstreckt, dass das Halteelement 50 in die Aufnahme 31 von außen in das Verbindungselement 30 einschiebbar ist.

Das Verbindungselement 30 wird zunächst durch Stanzen hergestellt und ist plattenförmig ausgebildet, wobei die Materialstärke des Verbindungselements 30 im Bereich zwischen 2 und 5 mm, bevorzugterweise im Bereich zwischen 3 und 4 mm, liegt.

Ferner gibt Figur 14 zu erkennen, dass die Aufnahme 31 ähnlich einem offenen Langloch ausgebildet ist und zwei Teilbereiche 32, 33 umfasst.

Hierbei ist ein erster Teilbereich 32 als Einführhilfe für das vereinfachte Einschieben des Halteelements 50 in das Verbindungselement 30 ausgebildet, wohingegen ein zweiter Teilbereich 33 als Montagebereich ausgebildet ist, in den das Halteelement 50 zur Befestigung einschiebbar und anordenbar ist.

Die Aufnahme 31 bzw. deren zweiter Teilbereich 33 ist passgenau auf das Halteelement 50 angepasst und bildet zusammen mit einem Halteelement 50 eines Fahrzeugbodens einen Laufsitz als Passung, insbesondere einen engen Laufsitz.

Der erste Teilbereich 32 hat eine Öffnung 34 zum Einschieben des Halteelements 50 in das Verbindungselement 30, wobei die Aufnahme 31 bzw. deren erster Teilbereich 32 auf eine bestimmbare Öffnungsbreite konisch zulaufend ausgebildet ist.

Anders ausgedrückt, hat der erste Teilbereich 32 eine größere Öffnungsbreite für das Halteelement 50 als der zweite Teilbereich 33.

Wie aus Figur 14 ferner hervorgeht, hat das Verbindungselement 30 zwei Führungsabschnitte 36, 37 zum Führen und Positionieren innerhalb des Aufnahmebereichs 12 des Befestigungsprofils 10.

Die zwei Führungsabschnitte 36, 37 sind als halbkreisförmiger Teilabschnitt seitlich am Verbindungselement 30 ausgebildet, um einen Vorsprung 25 eines Seitenwandelements 15, 16 des Befestigungsprofils 10 teilweise zu umschließen.

Des Weiteren zeigt Figur 14, dass das Verbindungselement 30 an der gegenüberliegenden Seite zur Öffnung 34 der Aufnahme 31 ein Befestigungselement 40 zum bewegbaren Anordnen an dem Befestigungsprofil 10 hat.

Das Befestigungselement 40 umfasst zwei Schenkel 41, 42 und ist L-förmig ausgebildet, wobei ein erster Schenkel 41 des Befestigungselements 40 zum Durchführen durch eine Durchführung 24 des Befestigungsprofils 10 ausgebildet ist (vergleiche Figur 15).

Figur 14 ist ferner zu entnehmen, dass der erste Schenkel 41 in der Ebene des Verbindungselements 30 als partielle Verlängerung ausgebildet ist, wobei der erste Schenkel 41 einen zweiten Schenkel 42 mit der Aufnahme 31 verbindet.

Der zweite Schenkel 42 des Befestigungselements 40 ist zum Eingreifen in einen Aufnahmeabschnitt 23 eines Verbindungsteilprofils 22 des Befestigungsprofils 10 ausgebildet (vergleiche Figur 15).

Hierbei erstreckt sich der zweite Schenkel 42 im Wesentlichen senkrecht von der Ebene des Verbindungselements 30 weg.

Auch geht aus Figur 14 hervor, dass das Verbindungselement 30 seitlich neben der Öffnung 34 der Aufnahme 31 Zentriernasen 43, 44 zum vereinfachten Einführen des Halteelements 50 am Fahrzeugboden umfasst.

Die Zentriernasen 43, 44 erstrecken sich in einem fließenden Übergang gebogen aus der Ebene des Verbindungselements 30 von der Aufnahme 31 weg, wobei sich die Zentriernasen 43, 44 in entgegengesetzte Richtung zu dem zweiten Schenkel 42 des Befestigungselements 40 erstrecken.

Sowohl die Zentriernasen 43, 44 als auch der zweite Schenkel 42 des Befestigungselements 40 sind durch Umformen bzw. Biegen hergestellt.

Figur 15 zeigt eine räumliche Teilansicht des erfindungsgemäßen Befestigungsprofils 10 gemäß dem dritten Ausführungsbeispiel aus Figur 13.

Das Befestigungsprofil 10 umfasst ein Seitenwandteil 11, insbesondere der erste Seitenwandelement 14 des Seitenwandteils 14, das sich im Wesentlichen in einer ersten Ebene Y-Z erstreckt.

Auch hat das Befestigungsprofil 10 einen Aufnahmebereich 12 zum verschiebbaren Aufnehmen Verbindungselements 30, das der Verbindung des Befestigungsprofils 10 mit einem Halteelement 50 eines Fahrzeugbodens dient, und ein Verbindungsteilprofil 22.

Der Aufnahmebereich 12 umfasst als Auflage für das Verbindungselement 30 ein Bodenelement 13, das sich im Wesentlichen in einer zweiten Ebene X-Y erstreckt, sodass das Befestigungsprofil 10 im Querschnitt L-förmig ausgebildet ist.

Dabei ist, wie aus Figur 15 hervorgeht, die Schnittrichtung zur Erzeugung des Querschnitts gleichorientiert zur Anschlussrichtung (verläuft in die dritte Raumrichtung X), in welcher sich das Befestigungsprofil 10 zur Anbindung am Rahmen einer Sitzvorrichtung erstreckt. Anders ausgedrückt, ist das Befestigungsprofil 10 im Querschnitt zur Anschlussrichtung für die Anbindung am Rahmen einer Sitzvorrichtung L-förmig ausgebildet.

Hierbei stellt der Aufnahmebereich 12 eine Auflagefläche in Form des Bodenelements 13 für das Verbindungselement 30 in einer zweiten Ebene X-Y zur Verfügung, sodass dieses auf dem Bodenelement 13 aufliegen kann und auf diesem relativ verdrehbar zum Befestigungsprofil 10 angeordnet ist.

Dabei ist der Aufnahmebereich 12 derart ausgebildet, dass das Verbindungselement 30 in den Aufnahmebereich 12 durch Drehung um die zweite Raumrichtung Y einsetzbar ist, und dass das Verbindungselement 30 innerhalb des Aufnahmebereichs 12 und relativ zum Befestigungsprofil 10 um die erste Raumrichtung Z rotatorisch bewegbar ist.

Das Seitenwandteil 11 bildet zusammen mit dem Bodenelement 13 den Aufnahmebereich 12 aus, in welchem das Verbindungselement 30 bewegbar zum Befestigungsprofil 10 einlegbar ist, wobei das Seitenwandteil 11 U-förmig ausgebildet ist.

Ferner hat das Seitenwandteil 11 ein erstes Seitenwandelement 14 als Rückseite, das das Befestigungsprofil 10 mit einem Rahmen einer Sitzvorrichtung verbindet und das sich im Wesentlichen in der ersten Ebene Y-Z erstreckt.

Genauer geschildert, erstreckt sich das erste Seitenwandelement 14 im Wesentlichen in der ersten Ebene Y-Z und verbindet in einem geschwungenen Verlauf (im Querschnitt bzw. in X-Z Ebene gesehen) zwei zweite Ebenen X-Y, nämlich das Bodenelement 13 mit einem Rahmenteil 26 auf unterschiedlichen Höhen miteinander.

Auch hat das Seitenwandteil 11 ein zweites 15 und ein drittes Seitenwandelement 16 jeweils als Seitenführung für das Verbindungselement 30, wobei das erste, zweite und dritte Seitenwandelement 14, 15, 16 zusammen eine U-Form bilden.

Diese beiden Seitenwandteile 15, 16 erstrecken sich im Wesentlichen in einer dritten Ebene X-Z, wie Figur 15 zeigt.

Hierbei haben das zweite 15 und das dritte Seitenwandelement 16 jeweils einen Vorsprung 25 für die Führungsabschnitte 36, 37 des Verbindungselements 30.

Ferner zeigt Figur 15, dass das Bodenelement 13 und die Seitenwandelemente 14, 15, 16 einstückig ausgebildet sind.

Auch geht aus Figur 15 hervor, dass das Bodenelement 13 einen Bodenteil 17 und einen Bodenerhöhungsteil 18 umfasst, welcher die Höhe des in den Aufnahmebereich 12 einlegbaren Verbindungselements 30 relativ zum Seitenwandteil 11 bestimmt.

Hierbei erstreckt sich der Bodenerhöhungsteil 18 vom Bodenteil 17 weg und in Richtung des Aufnahmebereichs 12, um die Höhe des in den Aufnahmebereich 12 einlegbaren Verbindungselements 30 relativ zu dem Seitenwandteil 11 zu bestimmen,

Der Bodenerhöhungsteil 18 ist durch Umformen des Bodenteils 17 bzw. durch Prägen aus dem Bodenteil 17 hergestellt.

Der Bodenerhöhungsteil 18 und auch der Bodenteil 17 sind U-förmig ausgebildet, wobei sich die beiden gleichorientierten Schenkel des U-förmigen Bodenerhöhungsteil 18 und des U-förmigen Bodenteils 17 in die dritte bzw. entlang der dritten Raumrichtung X erstrecken. Dadurch kann ein Einführen des Halteelements 50 in das Befestigungsprofil 10 entlang der dritten Raumrichtung X gewährleistet werden.

Auch geht aus Figur 15 hervor, dass das Verbindungsteilprofil 22 U-förmig ausgebildet ist und im Anschluss an das Seitenwandteil 11, insbesondere senkrecht zum Seitenwandteil 11 orientiert, angeordnet ist. Das Seitenwandteil 11 und das Verbindungsteilprofil 22 sind einstückig ausgebildet.

Das Verbindungsteilprofil 22 verbindet das Befestigungsprofil 10 mit einem Rahmen einer Sitzvorrichtung, wobei das Verbindungsteilprofil 22 einen Aufnahmeabschnitt 23 zum Eingreifen des zweiten Schenkels 42 des Verbindungselements 30 hat.

Das erste Seitenwandelement 14 umfasst eine Durchführung 24 zum Durchführen des ersten Schenkels 41 des Verbindungselements 30.

Zusammenfassend kann betreffend Figur 15 festgehalten werden, dass die als Rückseite und als Seitenführung ausgebildeten ersten, zweiten und dritten Seitenwandelemente 14, 15, 16 des Befestigungsprofils 10 und die zwei Führungsabschnitte 36, 37 des Verbindungselements 30, die von dem Seitenwandelementen 14, 15, 16 geführt werden, derart geometrisch aufeinander abgestimmt sind, dass das Verbindungselement 30 relativ zum Befestigungsprofil 10 rotatorisch bewegbar ist. Dadurch ist das Verbindungselement 30 zu einem Halteelement 50 selbstausrichtbar.

Nochmals mit anderen Worten geschildert, ist das Verbindungselement 30 in dem Aufnahmebereich 12 des Befestigungsprofils 10 derart angeordnet, dass sich das Verbindungselement 30 relativ zum Befestigungsprofil 10 um die erste Raumrichtung Z drehen kann.

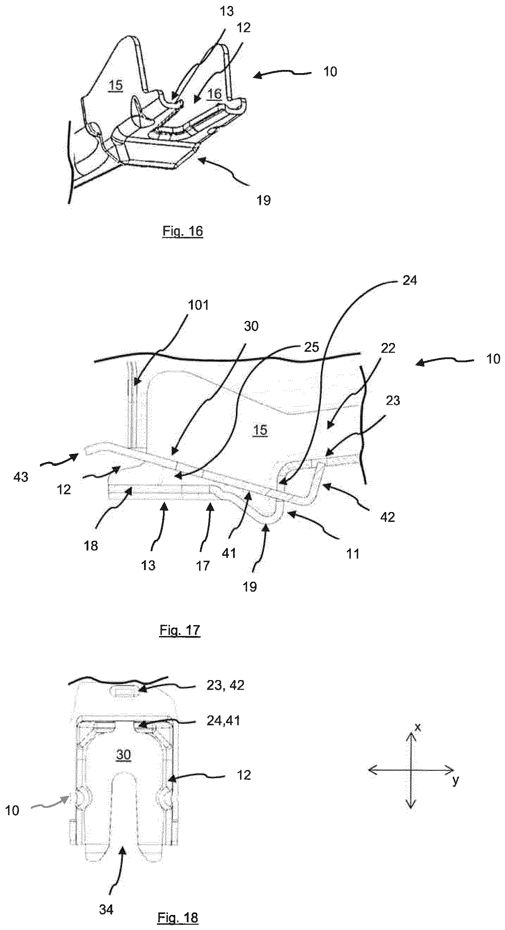

Figur 16 zeigt eine räumliche Teilansicht des Befestigungsprofils 10 aus Figur 15 aus einer weiteren Perspektive.

Dabei geht aus Figur 16 hervor, dass das Bodenelement 13 einen Bodenverspannungsteil 19 umfasst, welcher sich vom Bodenteil 17 in entgegengesetzte Richtung zum Aufnahmebereich 12 weg erstreckt, um eine Anlagefläche zum Verspannen gegen einen Fahrzeugboden zu bilden.

Figur 17 zeigt eine seitliche Schnittansicht eines Teils des Systems 100 aus Figur 13.

Hierbei ist das Bodenelement 13 mit dem Bodenteil 17 und dem Bodenerhöhungsteil 18 zu erkennen, wobei sich der Bodenerhöhungsteil 18 vom Bodenteil 17 weg und in Richtung des Aufnahmebereichs 12 erstreckt, um die Höhe eines in den Aufnahmebereich 12 einlegbaren Verbindungselements 30 relativ zu dem Seitenwandteil 11 zu bestimmen.

Auch ist der Bodenverspannungsteil 19 dargestellt, welcher sich vom Bodenteil 17 in entgegengesetzte Richtung zum Aufnahmebereich 12 weg erstreckt, um eine Anlagefläche zum Verspannen gegen einen Fahrzeugboden zu bilden.

Des Weiteren zeigt Figur 17 das Verbindungsteilprofil 22 des Befestigungsprofils 10, wobei das Verbindungsteilprofil 22 im Anschluss an das Seitenwandteil 11 und senkrecht zum Seitenwandteil 11 orientiert angeordnet ist.

Ferner ist zu erkennen, dass in den Aufnahmeabschnitt 23 der zweite Schenkel 42 des Verbindungselements 30 eingreift, wobei in der Durchführung 24 der erste Schenkel 41 des Verbindungselements 30 durchgreift.

In Figur 17 ist zudem ein Vorsprung 25, ausgebildet als Sicke, des Seitenwandelements 15 des Befestigungsprofils 10 dargestellt.

Figur 18 zeigt eine Draufsicht auf die Darstellung nach Figur 17, wobei das Verbindungselement 30 im Aufnahmebereich 12 des Befestigungsprofils 10 angeordnet ist.

Ebenfalls ist zu erkennen, dass der zweite Schenkel 42 des Verbindungselements 30 in den Aufnahmeabschnitt 23 eingreift und dass der erste Schenkel 41 des Verbindungselements 30 durch die Durchführung 24 durchgreift.

Des Weiteren ist gezeigt, wie die Vorsprünge 25 des Befestigungselements 10 in die zwei Führungsabschnitte 36, 37 des Verbindungselements 30 eingreifen.

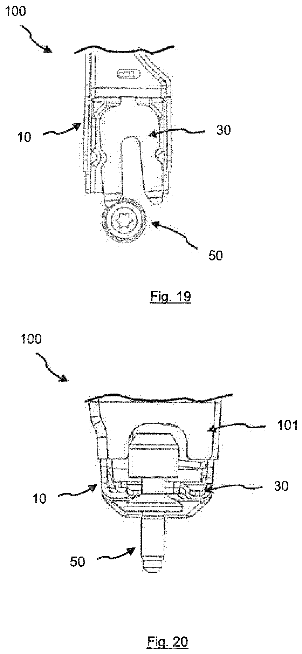

Figur 19 zeigt eine ähnliche Ansicht, wie Figur 18, d.h. eine Draufsicht auf Figur 17 zusammen mit einem Halteelement 50, wobei Figur 20 eine seitliche Ansicht auf die Darstellung nach Figur 19 zeigt.

Hierbei zeigen beide Figuren 19 und 20, dass das Verbindungselement 30 bewegbar bzw. verdrehbar um die erste Raumrichtung Z und zum Befestigungsprofil 10 und im Aufnahmebereich 12 des Befestigungsprofils 10 angeordnet ist, um eine Selbstausrichtung des Verbindungselements 30 zum Halteelement 50, das an einem Fahrzeugboden befestigbar ist, zu gewährleisten.

Aufgrund der möglichen Selbstausrichtung bzw. aufgrund der Bewegung um die erste Raumrichtung Z können Montagetoleranzen kompensiert werden, sodass das Verbindungselement 30 durch relative Bewegung zum Befestigungsprofil 10 eine Position einnehmen kann, die das Aufnehmen des passgenauen Halteelements 50 erlaubt.

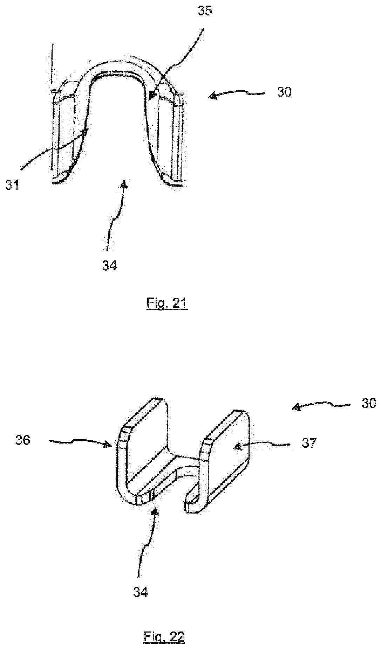

Figur 21 zeigt eine räumliche Ansicht eines nicht erfindungsgemäßen Verbindungselements 30.

Im Gegensatz zum zweiten Ausführungsbeispiel ist die Montagekante 35 durch Tiefziehen und die Aufnahme 31 durch Ausstanzen hergestellt.

Jedoch auch im Ausführungsbeispiel nach Figur 21 wird die Aufnahme 31 von der Montagekante 35 als Rand umgeben.

Figur 22 zeigt eine räumliche Ansicht eines nicht erfindungsgemäßen Verbindungselements 30.

Im Unterschied zum zweiten Ausführungsbeispiel hat das Verbindungselement 30 keine Montagekante 35, jedoch in die erste Raumrichtung Z umgebogene Führungsabschnitte 36, 37.

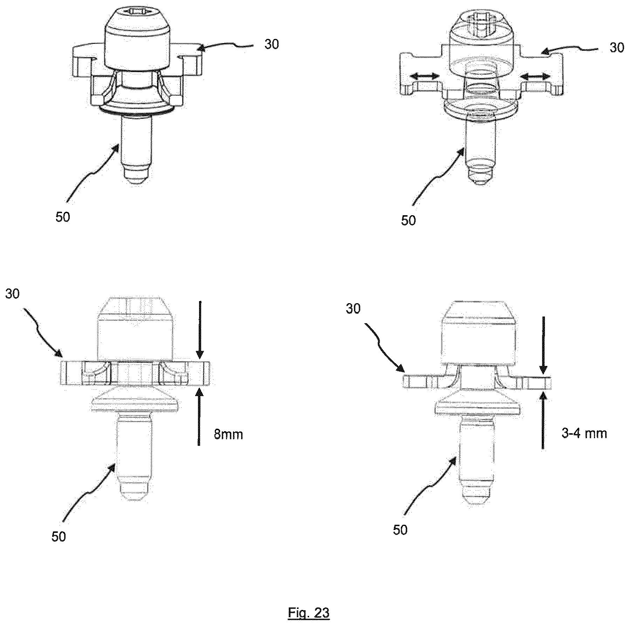

Figur 23 zeigt einen Vergleich eines Verbindungselements 30 aus dem Stand der Technik (linke Seite) mit dem erfindungsgemäßen Verbindungselement 30 (rechte Seite).

Hierbei fällt sofort ins Auge, dass die Aufnahme 31 des erfindungsgemäßen Verbindungselements 30 passgenau auf das Halteelement 50 an einem Fahrzeugboden angepasst ist.

Demgegenüber hat das Verbindungselement 30 aus dem Stand der Technik ein deutlich größeres Spiel entlang der zweiten Raumrichtung Y.

Auch geht aus Figur 23 hervor, dass das Verbindungselement 30 aus dem Stand der Technik entlang der dritten Raumrichtung Z eine größere Materialstärke aufweist als das erfindungsgemäße Verbindungselement 30.

Die Reduzierung der Materialstärke geht mit der Montagekante 35 einher. Abschließend wird noch erwähnt, dass die erste Z und zweite Y und dritte Raumrichtung X zueinander senkrecht orientiert sind.

Auch ist das Befestigungsprofil 10 in allen Ausführungsbeispielen einteilig bzw. einstückig ausgebildet.

### Bezugszeichenliste

- 10: Befestigungsprofil
- 11: Seitenwandteil
- 12: Aufnahmebereich
- 13: Bodenelement
- 14: erstes Seitenwandelement
- 15: zweites Seitenwandelement
- 16: dritte Seitenwandelement
- 17: Bodenteil
- 18: Bodenerhöhungsteil
- 19: Bodenverspannungsteil
- 20: Führungselement
- 21: Führungselement
- 22: Verbindungsteilprofil
- 23: Aufnahmeabschnitt
- 24: Durchführung
- 25: Vorsprung
- 26: Rahmenteil

- 30: Verbindungselement
- 31: Aufnahme
- 32: erster Teilbereich
- 33: zweite Teilbereich
- 34: Öffnung
- 35: Montagekante
- 36: Führungsabschnitt
- 37: Führungsabschnitt
- 38: Führungsabschnitt
- 39: Führungsabschnitt
- 40: Befestigungselement
- 41: erster Schenkel
- 42: zweiter Schenkel
- 43: Zentriernase
- 44: Zentriernase

- 50: Halteelement
- 51: Aufnahmeteil
- 52: Anschlag
- 53: Anschlag
- 100: System
- 101: Profilelement
- Z: erste Raumrichtung
- Y: zweite Raumrichtung X dritte Raumrichtung
- Y-Z: erste Ebene
- X-Y: zweite Ebene
- X-Z: dritte Ebene

## Patentansprüche

1. Befestigungsprofil (10) zur Befestigung einer Sitzvorrichtung eines Fahrzeuges an einem Fahrzeugboden, insbesondere an einem Halteelement (50) eines Fahrzeugbodens, aufweisend:
- ein Seitenwandteil (11), das sich im Wesentlichen in einer ersten Ebene (Y-Z) erstreckt,
- einen Aufnahmebereich (12) zum verschiebbaren Aufnehmen eines Verbindungselements (30), das der Verbindung des Befestigungsprofils (10) mit einem Halteelement (50) eines Fahrzeugbodens dient,
wobei der Aufnahmebereich (12) als Auflage für ein Verbindungselement (30) ein Bodenelement (13) umfasst, das sich im Wesentlichen in einer zweiten Ebene (X-Y) erstreckt, sodass das Befestigungsprofil (10) im Querschnitt L-förmig ausgebildet ist,
- wobei
der Aufnahmebereich (12) wenigstens ein Führungselement (20, 21), insbesondere zwei Führungselemente, zur seitlichen Führung eines Verbindungselements (30) umfasst, **dadurch gekennzeichnet, dass** das wenigstens eine Führungselement (20, 21) säulenartig vom Bodenelement (13) weg erstreckt, um zusammen mit dem Seitenwandteil (11) des Befestigungsprofils (10), insbesondere mit einem ersten als Rückseite und/oder zweiten und/oder dritten als Seitenführung ausgebildeten Seitenwandelement (14, 15, 16) des Seitenwandteils (11), eine Führung zum seitlichen Verschieben eines Verbindungselements (30) innerhalb des Aufnahmebereichs (12) zu bilden,
oder
das Seitenwandteil (11) ein zweites (15) und ein drittes Seitenwandelement (16) jeweils als Seitenführung für ein Verbindungselement (30) umfasst, wobei das zweite (15) und das dritte Seitenwandelement (16) jeweils einen Vorsprung (25) für einen Führungsabschnitt (36, 37, 38, 39) eines Verbindungselements (30) umfassen,
oder
wenigstens ein Führungselement (20, 21) mit einem zweiten und dritten Seitenwandelement (15, 16) des Seitenwandteils (11) einstückig ausgebildet ist, um eine fensterartige Aufnahmestelle zusammen mit dem Bodenelement (13) zu bilden.

2. Befestigungsprofil nach Anspruch 1,
- wobei der Aufnahmebereich (12) derart ausgebildet ist, dass ein Verbindungselement (30) in den Aufnahmebereich (12) entlang einer ersten Raumrichtung (Z) einsetzbar ist, und dass das Verbindungselement (30) innerhalb des Aufnahmebereichs (12) und relativ zum Befestigungsprofil (10) entlang einer zweiten (Y) und/oder einer dritten Raumrichtung (X) linear bewegbar ist,
oder
- wobei der Aufnahmebereich (12) derart ausgebildet ist, dass ein Verbindungselement (30) in den Aufnahmebereich (12) durch Drehung um eine zweite oder um eine dritte Raumrichtung (X, Y) einsetzbar ist, und dass das Verbindungselement (30) innerhalb des Aufnahmebereichs (12) und relativ zum Befestigungsprofil (10) um eine erste Raumrichtung (Z) rotatorisch oder entlang der zweiten (Y) und/oder der dritten Raumrichtung (X) linear bewegbar ist,
und
- wobei vorzugsweise die erste (Z) und/oder zweite (Y) und/oder dritte Raumrichtung (X) zueinander senkrecht orientiert sind,
- wobei vorzugsweise die erste (Y-Z) und/oder zweite (X-Y) und/oder dritte Ebene (X-Z) zueinander derart orientiert sind, dass sich zumindest zwei Ebenen in einem Winkel zwischen 30 und 90 Grad schneiden.

3. Befestigungsprofil nach Anspruch 1 oder 2,
- wobei sich das erste Seitenwandelement (14) im Wesentlichen in der ersten Ebene (Y-Z) erstreckt,
- wobei sich das zweite (15) und das dritte Seitenwandelement (16) im Wesentlichen in der dritten Ebene (X-Z) erstreckt.

4. Befestigungsprofil nach einem der vorangehenden Ansprüche,
- wobei das Bodenelement (13) einen Bodenteil (17) und gegebenenfalls einen Bodenerhöhungsteil (18) umfasst, welcher die Höhe eines in den Aufnahmebereich (12) einlegbaren Verbindungselements (30) relativ zum Seitenwandteil (11) bestimmt,
- wobei sich vorzugsweise der Bodenerhöhungsteil (18) vom Bodenteil (17) weg und in Richtung des Aufnahmebereichs (12) erstreckt, um die Höhe eines in den Aufnahmebereich (12) einlegbaren Verbindungselements (30) relativ zu dem Seitenwandteil (11) zu bestimmen,
- wobei vorzugsweise das Bodenelement (13) einen Bodenverspannungsteil (19) umfasst, welcher sich vom Bodenteil (17) in entgegengesetzte Richtung zum Aufnahmebereich (12) weg erstreckt, um eine Anlagefläche zum Verspannen gegen einen Fahrzeugboden zu bilden.

5. Befestigungsprofil nach einem der vorangehenden Ansprüche,
- wobei das Befestigungsprofil (10) ein Verbindungsteilprofil (22) umfasst,
- wobei vorzugsweise das Verbindungsteilprofil (22) das Befestigungsprofil (10) zu einem Rahmen einer Sitzvorrichtung verbindet,
- wobei vorzugsweise das Verbindungsteilprofil (22) einen Aufnahmeabschnitt (23) zum Eingreifen eines zweiten Schenkels (42) eines Verbindungselements (30) umfasst,
- wobei vorzugsweise das erste Seitenwandelement (14) eine Durchführung (24) zum Durchführen eines ersten Schenkels (41) eines Verbindungselements (30) umfasst.

6. Verbindungselement (30) zum lösbaren Verbinden eines Befestigungsprofils (10) nach einem der vorangehenden Ansprüche, an einem Halteelement (50) eines Fahrzeugbodens, aufweisend:
- eine Aufnahme (31) zum Einschieben eines Halteelements (50) eines Fahrzeugbodens,
- wobei die Aufnahme (31) als Ausnehmung ausgebildet ist und sich in das Verbindungselement (30) derart von außen nach innen erstreckt, dass ein Halteelement (50) in die Aufnahme (31) von außen in das Verbindungselement (30) einschiebbar ist,
- wobei das Verbindungselement (30) durch Stanzen und/oder durch Tiefziehen hergestellt ist,
- wobei das Verbindungselement (30) wenigstens einen Führungsabschnitt (36, 37, 38, 39) zum Führen und Positionieren innerhalb eines Aufnahmebereichs (12) eines Befestigungsprofils (10) umfasst,
**dadurch gekennzeichnet, dass**
der wenigstens eine Führungsabschnitt (36, 37, 38, 39)
aus dem Verbindungselement (30) als Nase hervorragt, um zwischen einem Führungselement (20, 21) und einem Seitenwandelement (15, 16) oder in einem Seitenwandelement (15, 16) eines Befestigungsprofils (10) geführt zu werden,
oder
als U-förmiger oder halbkreisförmiger Teilabschnitt seitlich am Verbindungselement (30) ausgebildet ist, um einen Vorsprung (25), insbesondere eine Sicke, eines Seitenwandelements (15, 16) eines Befestigungsprofils (10) teilweise zu umschließen.

7. Verbindungselement nach Anspruch 6,
- wobei das Verbindungselement (30) plattenförmig ausgebildet ist,
- wobei vorzugsweise das Verbindungselement (30) eine Materialstärke im Bereich zwischen 2 und 5 mm, bevorzugterweise im Bereich zwischen 3 und 4 mm, aufweist,
- wobei vorzugsweise die Aufnahme (31) ähnlich einem offenen Langloch ausgebildet ist.

8. Verbindungselement nach Anspruch 6 oder 7,
- wobei die Aufnahme (31) zwei Teilbereiche (32, 33) umfasst,
- wobei vorzugsweise ein erster Teilbereich (32) als Einführhilfe für das vereinfachte Einschieben eines Halteelements (50) eines Fahrzeugbodens in das Verbindungselement (30) ausgebildet ist,
- wobei vorzugsweise ein zweiter Teilbereich (33) als Montagebereich ausgebildet ist, in den ein Halteelement (50) eines Fahrzeugbodens zur Befestigung einschiebbar und anordenbar ist,
- wobei vorzugsweise die Aufnahme (31) passgenau auf ein Halteelement (50) an einem Fahrzeugboden angepasst ist.

9. Verbindungselement nach einem der Ansprüche 6 bis 8,
- wobei das Verbindungselement (30) eine Montagekante (35) umfasst, die aus der Oberfläche (O) des Verbindungselements (30) hervorragt,
- wobei vorzugsweise die Montagekante (35) durch Umformen und/oder durch Tiefziehen und/oder die Aufnahme (31) durch Ausstanzen hergestellt ist,
- wobei vorzugsweise die Montagekante (35) die Aufnahme (31) als Rand umgibt,
- wobei vorzugsweise die Montagekante (35) zumindest teilweise rampenförmig ausgebildet ist,
- wobei vorzugsweise die Montagekante (35) beginnend am zweiten Teilbereich (33) hin zur Öffnung (34) des ersten Teilbereichs (32) keilförmig zuläuft, sodass vorzugsweise die Montagekante (35) am zweiten Teilbereich (33) ihre maximale Höhe und an der Öffnung (34) des ersten Teilbereichs (32) ihre minimale Höhe umfasst.

10. Verbindungselement nach einem der Ansprüche 6 bis 9,
- wobei das Verbindungselement (30) an der gegenüberliegenden Seite zu einer Öffnung (34) der Aufnahme (31) ein Befestigungselement (40) zum bewegbaren Anordnen an einem Befestigungsprofil (10) umfasst,
- wobei vorzugsweise das Befestigungselement (40) zwei Schenkel (41, 42) umfasst und L-förmig ausgebildet ist,
- wobei vorzugsweise ein erster Schenkel (41) des Befestigungselements (40) zum Durchführen durch eine Durchführung (24) eines Befestigungsprofils (10) ausgebildet ist,
- wobei vorzugsweise der erste Schenkel (41) in der Ebene des Verbindungselements (30) als partielle Verlängerung ausgebildet ist,
- wobei vorzugsweise der erste Schenkel (41) einen zweiten Schenkel (42) mit der Aufnahme (31) verbindet,
- wobei vorzugsweise ein zweiter Schenkel (42) des Befestigungselements (40) zum Eingreifen in einen Aufnahmeabschnitt (23) eines Verbindungsteilprofils (22) eines Befestigungsprofils (10) ausgebildet ist.

11. System (100) zum Verbinden eines Befestigungsprofils (10) für eine Sitzvorrichtung eines Fahrzeuges mit einem Halteelement (50) eines Fahrzeugbodens aufweisend:
- ein Befestigungsprofil (10) nach einem der Ansprüche 1 bis 5,
- ein Verbindungselement (30) nach einem der Ansprüche 6 bis 10,
wobei
- das Verbindungselement (30) bewegbar zum Befestigungsprofil (10) und im Aufnahmebereich (12) des Befestigungsprofils (10) angeordnet ist, um eine Selbstausrichtung des Verbindungselements (30) zu einem Halteelement (50), das an einem Fahrzeugboden befestigbar ist, zu gewährleisten.

12. System nach Anspruch 11,
- wobei der Aufnahmebereich (12) des Befestigungsprofils (10) und das Verbindungselement (30) derart geometrisch komplementär ausgebildet sind, dass das Verbindungselement (30) relativ zum Befestigungsprofil (10) linear und/oder rotatorisch bewegbar ist, wodurch das Verbindungselement (30) zu einem Halteelement (50) selbstausrichtbar ist,
- wobei die geometrisch komplementäre Ausbildung eine Bewegung, insbesondere eine lineare Bewegung, im Bereich zwischen 2 und 10 mm zulässt,
- wobei vorzugsweise die geometrisch komplementäre Ausbildung eine Rotation im Bereich zwischen 2 und 30 Grad zulässt.

13. System nach Anspruch 11 oder 12,
- wobei das System ein Halteelement (50), das insbesondere an einem Fahrzeugboden eines Fahrzeuges befestigbar ist, umfasst,
- wobei vorzugsweise das Halteelement (50) einen Aufnahmeteil (51) umfasst, welcher von zwei Anschlägen (52, 53) begrenzt ist,
- wobei vorzugsweise der Aufnahmeteil (51) zusammen mit der Aufnahme (31) des Verbindungselements (30), insbesondere mit dessen zweitem Teilbereich (33), einen Laufsitz als Passung, insbesondere einen engen Laufsitz, aufweist,
- wobei vorzugsweise ein Laufsitz eine Passung im Bereich H7/f7 bis F8/h9 und vorzugsweise ein enger Laufsitz eine Passung im Bereich G7/h6 bis H7/g6 aufweist.

14. System nach einem der Ansprüche 11 bis 13,
- wobei das System (100) ein Profilelement (101) umfasst, das derart am Befestigungsprofil (10) angeordnet ist, dass das Verbindungselement (30), angeordnet in dem Aufnahmebereich (12) des Befestigungsprofils (10), gegen ein Lösen vom Befestigungsprofil (10) gesichert ist,
- wobei vorzugsweise das Profilelement (101) derart am Befestigungsprofil (10) angeordnet ist, dass die Raumrichtung (Y, Z), entlang welcher das Verbindungselement (30) zum Einsetzen in den Aufnahmebereich (12) bewegt wird oder um welche das Verbindungselement (30) zum Einsetzen in den Aufnahmebereich (12) geschwenkt wird, gesperrt ist.

## Claims

1. Attachment profile (10) for attaching a seat device of a vehicle to a vehicle floor, in particular to a holding element (50) of a vehicle floor, having:
- a side wall part (11), which extends substantially in a first plane (Y-Z),
- a receiving area (12) for displaceably receiving a connection element (30), which serves to connect the attachment profile (10) to a holding element (50) of a vehicle floor,
wherein the receiving area (12) comprises, as support for a connection element (30), a floor element (13), which extends substantially in a second plane (X-Y), with the result that the attachment profile (10) is formed L-shaped in cross section,
- wherein the receiving area (12) comprises at least one guide element (20, 21), in particular two guide elements, for laterally guiding a connection element (30), **characterized in that** the at least one guide element (20, 21) extends in the manner of a column away from the floor element (13), in order to form, together with the side wall part (11) of the attachment profile (10), in particular with, formed as a back side, a first and/or, formed as a lateral guide, a second and/or third side wall element (14, 15, 16) of the side wall part (11), a guide for the lateral displacement of a connection element (30) inside the receiving area (12),
or
the side wall part (11) comprises a second (15) and a third (16) side wall element in each case as a lateral guide for a connection element (30), wherein the second (15) and the third (16) side wall element in each case comprise a protrusion (25) for a guide section (36, 37, 38, 39) of a connection element (30),
or
at least one guide element (20, 21) is formed in one piece with a second and third side wall element (15, 16) of the side wall part (11), in order to form a window-like receiving point together with the floor element (13).

2. Attachment profile according to claim 1,
- wherein the receiving area (12) is formed such that a connection element (30) can be inserted into the receiving area (12) along a first spatial direction (Z), and that the connection element (30) is movable inside the receiving area (12) and relative to the attachment profile (10) linearly along a second (Y) and/or a third (X) spatial direction,
or
- wherein the receiving area (12) is formed such that a connection element (30) can be inserted into the receiving area (12) by rotation about a second or about a third spatial direction (X, Y), and that the connection element (30) is movable inside the receiving area (12) and relative to the attachment profile (10) rotationally about a first spatial direction (Z) or linearly along the second (Y) and/or the third (X) spatial direction,
and
- wherein the first (Z) and/or second (Y) and/or third (X) spatial directions are preferably oriented perpendicular to each other,
- wherein the first (Y-Z) and/or second (X-Y) and/or third (X-Z) planes are preferably oriented relative to each other such that at least two planes intersect at an angle of between 30 and 90 degrees.

3. Attachment profile according to claim 1 or 2,
- wherein the first side wall element (14) extends substantially in the first plane (Y-Z),
- wherein the second (15) and the third (16) side wall element extends substantially in the third plane (X-Z).

4. Attachment profile according to one of the preceding claims,
- wherein the floor element (13) comprises a floor part (17) and, where appropriate, a floor-raising part (18), which determines the height of a connection element (30) that can be placed in the receiving area (12) relative to the side wall part (11),
- wherein the floor-raising part (18) preferably extends away from the floor part (17) and in the direction of the receiving area (12), in order to determine the height of a connection element (30) that can be placed in the receiving area (12) relative to the side wall part (11),
- wherein the floor element (13) preferably comprises a floor-bracing part (19), which extends away from the floor part (17) in the opposite direction to the receiving area (12), in order to form a bearing surface for bracing against a vehicle floor.

5. Attachment profile according to one of the preceding claims,
- wherein the attachment profile (10) comprises a connection part profile (22),
- wherein the connection part profile (22) preferably connects the attachment profile (10) to a frame of a seat device,
- wherein the connection part profile (22) preferably comprises a receiving section (23) for engagement of a second leg (42) of a connection element (30),
- wherein the first side wall element (14) preferably comprises a feed-through (24) for feeding a first leg (41) of a connection element (30) through.

6. Connection element (30) for detachably connecting an attachment profile (10) according to one of the preceding claims to a holding element (50) of a vehicle floor, having:
- a receiver (31) for pushing a holding element (50) of a vehicle floor in,
- wherein the receiver (31) is formed as a recess and extends into the connection element (30) from the outside to the inside such that a holding element (50) can be pushed into the receiver (31) from the outside into the connection element (30),
- wherein the connection element (30) is produced by punching and/or by deep-drawing,
- wherein the connection element (30) comprises at least one guide section (36, 37, 38, 39) for guiding and positioning inside a receiving area (12) of an attachment profile (10),
**characterized in that**
the at least one guide section (36, 37, 38, 39) protrudes from the connection element (30) as a lug, in order to be guided between a guide element (20, 21) and a side wall element (15, 16) or in a side wall element (15, 16) of an attachment profile (10),
or
is formed as a U-shaped or semi-circular partial section laterally on the connection element (30), in order to partially enclose a protrusion (25), in particular a beading, of a side wall element (15, 16) of an attachment profile (10).

7. Connection element according to claim 6,
- wherein the connection element (30) is formed plate-shaped,
- wherein the connection element (30) preferably has a material thickness in the range of between 2 and 5 mm, preferably in the range of between 3 and 4 mm,
- wherein the receiver (31) is preferably formed similar to an open elongated hole.

8. Connection element according to claim 6 or 7,
- wherein the receiver (31) comprises two partial areas (32, 33),
- wherein a first partial area (32) is preferably formed as an insertion aid for more easily pushing a holding element (50) of a vehicle floor into the connection element (30),
- wherein a second partial area (33) is preferably formed as an installation area, into which a holding element (50) of a vehicle floor can be pushed and arranged for the attachment,
- wherein the receiver (31) is preferably adapted in an accurately fitting manner to a holding element (50) on a vehicle floor.

9. Connection element according to one of claims 6 to 8,
- wherein the connection element (30) comprises an installation edge (35), which protrudes from the surface (O) of the connection element (30),
- wherein the installation edge (35) is preferably produced by forming and/or by deep-drawing and/or the receiver (31) is produced by punching,
- wherein the installation edge (35) preferably surrounds the receiver (31) as a rim,
- wherein the installation edge (35) is preferably formed at least partially ramp-shaped,
- wherein the installation edge (35), starting at the second partial area (33), preferably tapers towards the opening (34) of the first partial area (32) in a wedge-shaped manner, with the result that the installation edge (35) preferably comprises its maximum height in the second partial area (33) and its minimum height at the opening (34) of the first partial area (32).

10. Connection element according to one of claims 6 to 9,
- wherein the connection element (30) comprises an attachment element (40) on the opposite side to an opening (34) of the receiver (31), for the movable arrangement on an attachment profile (10),
- wherein the attachment element (40) preferably comprises two legs (41, 42) and is formed L-shaped,
- wherein a first leg (41) of the attachment element (40) is preferably formed for feeding through a feed-through (24) of an attachment profile (10),
- wherein the first leg (41) is preferably formed in the plane of the connection element (30) as a partial elongation,
- wherein the first leg (41) preferably connects a second leg (42) to the receiver (31),
- wherein a second leg (42) of the attachment element (40) is preferably formed for engagement in a receiving section (23) of a connection part profile (22) of an attachment profile (10).

11. System (100) for connecting an attachment profile (10) for a seat device of a vehicle to a holding element (50) of a vehicle floor having:
- an attachment profile (10) according to one of claims 1 to 5,
- a connection element (30) according to one of claims 6 to 10,
wherein
- the connection element (30) is arranged movable relative to the attachment profile (10) and in the receiving area (12) of the attachment profile (10), in order to guarantee a self-alignment of the connection element (30) relative to a holding element (50), which can be attached to a vehicle floor.

12. System according to claim 11,
- wherein the receiving area (12) of the attachment profile (10) and the connection element (30) are formed geometrically complementary such that the connection element (30) is movable linearly and/or rotationally relative to the attachment profile (10), whereby the connection element (30) is self-alignable relative to a holding element (50),
- wherein the geometrically complementary formation allows a movement, in particular a linear movement, in the range of between 2 and 10 mm,
- wherein the geometrically complementary formation preferably allows a rotation in the range of between 2 and 30 degrees.

13. System according to claim 11 or 12,
- wherein the system comprises a holding element (50), which can in particular be attached to a vehicle floor of a vehicle,
- wherein the holding element (50) preferably comprises a receiving part (51), which is delimited by two limit stops (52, 53),
- wherein the receiving part (51) preferably has, together with the receiver (31) of the connection element (30), in particular with its second partial area (33), a running fit as clearance fit, in particular a narrow running fit,
- wherein a running fit preferably has a clearance fit in the range of from H7/f7 to F8/h9 and a narrow running fit preferably has a clearance fit in the range of from G7/h6 to H7/g6.

14. System according to one of claims 11 to 13,
- wherein the system (100) comprises a profile element (101), which is arranged on the attachment profile (10) such that the connection element (30), arranged in the receiving area (12) of the attachment profile (10), is secured against a detachment from the attachment profile (10),
- wherein the profile element (101) is preferably arranged on the attachment profile (10) such that the spatial direction (Y, Z) along which the connection element (30) is moved for insertion into the receiving area (12) or about which the connection element (30) is pivoted for insertion into the receiving area (12) is blocked.

## Revendications

1. Profilé de fixation (10) servant à fixer un dispositif formant siège d'un véhicule à un plancher de véhicule, notamment à un élément d'attache (50) d'un plancher de véhicule, comportant :
- une partie de paroi latérale (11) qui s'étend pour l'essentiel dans un premier plan (Y-Z) ;
- une zone de réception (12) permettant de recevoir de façon coulissante un élément de liaison (30) servant à relier le profilé de fixation (10) à un élément d'attache (50) d'un plancher de véhicule ;
dans lequel la zone de réception (12) servant d'appui pour un élément de liaison (30) comprend un élément de plancher (13) s'étendant pour l'essentiel dans un deuxième plan (X-Y), de sorte que le profilé de fixation (10) soit réalisé en forme de L en section transversale ;
- dans lequel :
la zone de réception (12) comprend au moins un élément de guidage (20, 21), notamment deux éléments de guidage, pour le guidage latéral d'un élément de liaison (30), **caractérisé en ce que** l'au moins un élément de guidage (20, 21) s'écarte de l'élément de plancher (13) en prenant la forme de colonnes, pour former conjointement avec la partie de paroi latérale (11) du profilé de fixation (10), notamment avec un premier élément de paroi latérale (14, 15, 16) de la partie de paroi latérale (11) réalisé sous la forme d'un guidage arrière et/ou d'un deuxième et/ou troisième guidage latérale, un guidage permettant le coulissement latéral d'un élément de liaison (30) à l'intérieur de la zone de réception (12) ;
ou
la partie de paroi latérale (11) comprend respectivement un deuxième (15) et un troisième élément de paroi latérale (16) servant de guidage latéral pour un élément de liaison (30), dans lequel le deuxième (15) et le troisième élément de paroi latérale (16) comprennent respectivement une saillie (25) pour une section de guidage (36, 37, 38, 39) d'un élément de liaison (30) ;
ou
au moins un élément de guidage (20, 21) avec un deuxième et un troisième élément de paroi latérale (15, 16) de la partie de paroi latérale (11) réalisé d'un seul tenant pour former un point de réception de type fenêtre conjointement avec l'élément de plancher (13).

2. Profilé de fixation selon la revendication 1,
- dans lequel la zone de réception (12) est réalisée de telle sorte qu'un élément de liaison (30) peut être inséré dans la zone de réception (12) le long d'une première direction dans l'espace (Z) et que l'élément de liaison (30) peut se déplacer de façon linéaire à l'intérieur de la zone de réception (12) et par rapport au profilé de fixation (10) le long d'une deuxième (Y) et/ou d'une troisième direction dans l'espace (X) ;
ou
- dans lequel la zone de réception (12) est réalisée de telle sorte qu'un élément de liaison (30) peut être inséré dans la zone de réception (12) par rotation autour d'une deuxième ou d'une troisième direction dans l'espace (X, Y) et que l'élément de liaison (30) peut se déplacer en rotation à l'intérieur de la zone de réception (12) et par rapport au profilé de fixation (10) autour d'une première direction dans l'espace (Z) ou de façon linéaire le long de la deuxième (Y) et/ou de la troisième direction dans l'espace (X) ;
et
- dans lequel de préférence la première (Z) et/ou la deuxième (Y) et/ou la troisième direction dans l'espace (X) sont orientées perpendiculairement les unes par rapport aux autres ;
- dans lequel de préférence le premier (Y-Z) et/ou le deuxième (X-Y) et/ou le troisième plan (X-Z) sont orientés de telle sorte les uns par rapport aux autres qu'au moins deux plans se coupent selon un angle entre 30 et 90 degrés.

3. Profilé de fixation selon la revendication 1 ou 2,
- dans lequel le premier élément de paroi latérale (14) s'étend pour l'essentiel dans le premier plan (Y-Z) ;
- dans lequel le deuxième (15) et le troisième élément de paroi latérale (16) s'étend pour l'essentiel dans le troisième plan (X-Z).

4. Profilé de fixation selon l'une quelconque des revendications précédentes,
- dans lequel l'élément de plancher (13) comprend une partie de plancher (17) et le cas échéant une partie de surélévation de plancher (18) qui définit la hauteur d'un élément de liaison (30) pouvant être inséré dans la zone de réception (12) par rapport à la partie de paroi latérale (11) ;
- dans lequel la partie de surélévation de plancher (18) s'écarte de préférence de la partie de plancher (17) et s'étend en direction de la zone de réception (12), pour définir la hauteur d'un élément de liaison (30) pouvant être inséré dans la zone de réception (12) par rapport à la partie de paroi latérale (11) ;
- dans lequel l'élément de plancher (13) comprend de préférence une partie de déformation de plancher (19) s'écartant de la pièce de plancher (17) dans la direction opposée par rapport à la zone de réception (12) pour former une surface d'appui à déformer contre un plancher de véhicule.

5. Profilé de fixation selon l'une quelconque des revendications précédentes,
- dans lequel le profilé de fixation (10) comprend un profilé de partie de liaison (22) ;
- dans lequel le profilé de partie de liaison (22) relie de préférence le profilé de fixation (10) à un cadre d'un dispositif formant siège ;
- dans lequel le profilé de partie de liaison (22) comprend de préférence une section de réception (23) permettant d'emboîter une deuxième branche (42) d'un élément de liaison (30) ;
- dans lequel le premier élément de paroi latérale (14) comprend de préférence un passage (24) permettant de guider de façon traversante la première branche (41) d'un élément de liaison (30).

6. Élément de liaison (30) servant à relier de façon amovible un profilé de fixation (10) selon l'une quelconque des revendications précédentes à un élément d'attache (50) d'un plancher de véhicule, comportant :
- un logement (31) permettant d'insérer par coulissement un élément d'attache (50) d'un plancher de véhicule ;
- dans lequel le logement (31) est réalisé sous la forme d'un évidement et s'étend de telle sorte de l'extérieur vers l'intérieur dans l'élément de liaison (30) qu'un élément d'attache (50) peut être inséré dans le logement (31) depuis l'extérieur, dans l'élément de liaison (30) ;
- dans lequel l'élément de liaison (30) est fabriqué par estampage et/ou par emboutissage ;
- dans lequel l'élément de liaison (30) comprend au moins une section de guidage (36, 37, 38, 39) permettant de réaliser le guidage et le positionnement à l'intérieur d'une zone de réception (12) d'un profilé de fixation (10) ;
**caractérisé en ce que** :
- l'au moins une section de guidage (36, 37, 38, 39) ressort sous forme de bec hors de l'élément de liaison (30), pour être guidée entre un élément de guidage (20, 21) et un élément de paroi latérale (15, 16) ou dans un élément de paroi latérale (15, 16) d'un profilé de fixation (10) ; ou
la section partielle en forme de U ou en forme de demi-cercle est réalisée en côté au niveau de l'élément de liaison (30), pour entourer en partie une saillie (25), notamment une moulure, d'un élément de paroi latérale (15, 16) d'un profilé de fixation (10).

7. Élément de liaison selon la revendication 6,
- dans lequel l'élément de liaison (30) est réalisé en forme de plaque ;
- dans lequel l'élément de liaison (30) comporte de préférence une épaisseur de matériau située dans la plage comprise entre 2 et 5 mm, de façon préférée dans la plage comprise entre 3 et 4 mm ;
- dans lequel le logement (31) est de préférence réalisé de façon similaire à un trou oblong ouvert.

8. Élément de liaison selon la revendication 6 ou 7,
- dans lequel le logement (31) comprend deux zones partielles (32, 33) ;
- dans lequel une première zone partielle (32) est de préférence réalisée sous la forme d'un élément auxiliaire d'introduction pour insérer de façon simplifiée un élément d'attache (50) d'un plancher de véhicule dans l'élément de liaison (30) ;
- dans lequel une deuxième zone partielle (33) est de préférence réalisée sous la forme d'un chant de montage dans lequel un élément d'attache (50) d'un plancher de véhicule peut être inséré et agencé pour réaliser la fixation ;
- dans lequel le logement (31) est de préférence ajusté avec précision sur un élément d'attache (50) au niveau d'un plancher de véhicule.

9. Élément de liaison selon l'une quelconque des revendications 6 à 8,
- dans lequel l'élément de liaison (30) comprend une arête de montage (35) ressortant de la surface (O) de l'élément de liaison (30) ;
- dans lequel l'arête de montage (35) est de préférence fabriquée par déformation et/ou par emboutissage et/ou dans lequel le logement (31) est fabriqué par estampage ;
- dans lequel l'arête de montage (35) entoure de préférence le logement (31) à la façon d'une bordure ;
- dans lequel l'arête de montage (35) est réalisée de préférence au moins en partie en forme de rampe ;
- dans lequel l'arête de montage (35) se termine de préférence en forme de clavette en partant de la deuxième zone partielle (33) en direction de l'ouverture (34) de la première zone partielle (32), de sorte que l'arête de montage (35) comprenne de préférence au niveau de la deuxième zone partielle (33) sa hauteur maximale et au niveau de l'ouverture (34) de la première zone partielle (32) sa hauteur minimale.

10. Élément de liaison selon l'une quelconque des revendications 6 à 9,
- dans lequel l'élément de liaison (30) comprend, au niveau du côté opposé à une ouverture (34) du logement (31), un élément de fixation (40) pouvant être agencé de façon mobile au niveau d'un profilé de fixation (10) ;
- dans lequel l'élément de fixation (40) comprend de préférence deux branches (41, 42) et est réalisé en forme de L ;
- dans lequel une première branche (41) de l'élément de fixation (40) est de préférence réalisée pour être guidée au travers d'un passage (24) d'un profilé de fixation (10) ;
- dans lequel la première branche (41) est de préférence réalisée sous la forme d'un prolongement partiel dans le plan de l'élément de liaison (30) ;
- dans lequel la première branche (41) relie de préférence une deuxième branche (42) au logement (31) ;
- dans lequel une deuxième branche (42) de l'élément de fixation (40) est de préférence réalisée de façon à s'imbriquer dans une section de réception (23) d'un profilé de partie de liaison (22) d'un profilé de fixation (10).

11. Système (100) pour connecter un profilé de fixation (10) pour un dispositif formant siège d'un véhicule avec un élément d'attache (50) d'un plancher de véhicule comportant :
- un profilé de fixation (10) selon l'une quelconque des revendications 1 à 5 ;
- un élément de liaison (30) selon l'une quelconque des revendications 6 à 10 ;
dans lequel :
- l'élément de liaison (30) est disposé de façon à pouvoir être déplacé par rapport au profilé de fixation (10) et dans la zone de réception (12) du profilé de fixation (10), pour garantir un auto-alignement de l'élément de liaison (30) par rapport à un élément d'attache (50) pouvant être fixé à un plancher de véhicule.

12. Système selon la revendication 11,
- dans lequel la zone de réception (12) du profilé de fixation (10) et l'élément de liaison (30) sont réalisés de telle sorte de façon complémentaire sur le plan géométrique que l'élément de liaison (30) peut être déplacé de façon linéaire et/ou en rotation par rapport au profilé de fixation (10), permettant à l'élément de liaison (30) de s'auto-aligner par rapport à un élément d'attache (50) ;
- dans lequel la déformation de forme géométriquement complémentaire permet un mouvement, notamment un mouvement linéaire, dans la plage située entre 2 et 10 mm ;
- dans lequel la déformation de forme géométriquement complémentaire permet de préférence une rotation dans la plage située entre 2 et 30 degrés.

13. Système selon la revendication 11 ou 12,
- dans lequel le système comprend un élément d'attache (50) qui peut notamment être fixé à un plancher de véhicule d'un véhicule ;
- dans lequel l'élément d'attache (50) comprend de préférence une partie de logement (51) délimitée par deux butées (52, 53) ;
- dans lequel la partie de logement (51) comporte de préférence conjointement avec le logement (31) de l'élément de liaison (30), notamment avec sa deuxième zone partielle (33), un ajustement roulant prenant la forme d'un ajustement, notamment un ajustement roulant étroit ;
- dans lequel un ajustement roulant comporte de préférence un ajustement dans la zone H7/f7 à F8/h9 et un ajustement roulant étroit comporte de préférence un ajustement dans la zone G7/h6 à H7/g6.

14. Système selon l'une quelconque des revendications 11 à 13,
- dans lequel le système (100) comprend un élément profilé (101) qui est disposé de telle sorte au niveau du profilé de fixation (10) que l'élément de liaison (30), disposé dans la zone de réception (12) du profilé de fixation (10), est sécurisé contre tout desserrage du profilé de fixation (10) ;
- dans lequel l'élément profilé (101) est de préférence disposé de telle sorte au niveau du profilé de fixation (10) que la direction dans l'espace (Y, Z) le long de laquelle l'élément de liaison (30) est déplacé pour s'insérer dans la zone de réception (12) ou autour de laquelle l'élément de liaison (30) est pivoté pour s'insérer dans la zone de réception (12) est verrouillée.
